# EUROPEAN PATENT APPLICATION

(11) **EP 4 831 430 A1**
(43) Date of publication of application: **28.10.2026**
(21) Application number: 26173847.0
(22) Date of filing: 22.04.2026
(51) Int. Cl.: E05B 83/10, B65D 88/02, B65D 88/12, E05C 9/18

(54) **DOOR PANEL ASSEMBLY AND ENERGY STORAGE CONTAINER**

(30) Priority: 22.04.2025 CN 202510503309
(71) Applicant: Xiamen Hithium Energy Storage Technology Co., Ltd., Xiamen, Fujian 361100 (CN)
(72) Inventor: WANG, Pengcheng, Xiamen, 361100 (CN); SU, Xing, Xiamen, 361100 (CN); XIE, Hanyu, Xiamen, 361100 (CN); RONG, Jiepeng, Xiamen, 361100 (CN)
(74) Representative: RGTH

(57) **Abstract**

The present application provides a door panel assembly and an energy storage container. The door panel assembly includes a door frame, a first door panel, and a first locking assembly. The first door panel is rotatably connected to the door frame. The first door panel includes a first surface, a first opening, and a first accommodating cavity. The first surface faces the exterior of the energy storage container. The first opening is located on the first surface and can be closed or communicate with the exterior of the energy storage container. The first accommodating cavity communicates with the first opening; the first lock assembly includes a first locking mechanism and a second locking mechanism, where the first locking mechanism and at least a part of the second locking mechanism are located within the first accommodating cavity.

## Description

### TECHNICAL FIELD

The present application relates to the field of energy storage device, and more particularly to a door panel assembly and an energy storage container.

### BACKGROUND

Energy storage containers, as a convenient means of transportation, are widely used in various fields such as sea freight, land transportation, and warehousing. However, currently, the locking component of the energy storage container is usually installed on the exterior of the door, which results in the energy storage container occupying an excessive amount of space as a whole.

### SUMMARY

Embodiments of the present application provide a door panel assembly and an energy storage container, which can prevent the lock assembly from additionally occupying the space outside the door panel assembly, thereby improving the space utilization of the energy storage container.

According to a first aspect of the present application, there is provided a door panel assembly, including a door frame, a first door panel, and a first lock assembly;
where the first door panel is rotatably connected to the door frame, the first door panel includes a first surface, a first opening, and a first accommodating cavity, the first surface is configured to face exterior of an energy storage container to which the door panel assembly is applied, the first opening is located on the first surface and is capable of being closed to isolate from the exterior of the energy storage container or capable of being open to communicate with the exterior of the energy storage container, the first accommodating cavity communicates with the first opening;
the first lock assembly includes a first locking mechanism and a second locking mechanism, the first locking mechanism is located within the first accommodating cavity and rotatably connected to the first door panel, a part of the first locking mechanism is disposed opposite to the first opening in a thickness direction of the first door panel, at least a part of the second locking mechanism is located within the first accommodating cavity, and the second locking mechanism is fixedly connected to the door frame;
the door panel assembly includes a first state and a second state, when the door panel assembly is in the first state, the first locking mechanism and the second locking mechanism are locked, and the first door panel is relatively fixed to the door frame; when the door panel assembly is in the second state, the first locking mechanism and the second locking mechanism are unlocked, and the first door panel is rotatable relative to the door frame.

It can be understood that in prior art, the lock assembly of the energy storage container is typically installed on the exterior of the door, which occupies additional space on the exterior of the door of the energy storage container and consequently causes the energy storage container to take up excessive space as a whole. This may reduce the transportation efficiency of the energy storage container, thereby increasing its transportation costs. Furthermore, externally mounted lock assemblies are susceptible to environmental factors such as rain, dust, and smog, which accelerate corrosion and aging. In severe cases, this can lead to poor alignment between lock assemblies, making it difficult to open and close the door, and consequently affecting the operational efficiency and safety of the energy storage container.

Accordingly, in the embodiments of the present application, the first locking mechanism and at least a part of the second locking mechanism in the first lock assembly are arranged within the first accommodating cavity of the first door panel. This ensures that the first lock assembly occupies neither the external space of the energy storage container nor its internal space, thereby improving the space utilization of the energy storage container. Additionally, this arrangement protects the first lock assembly from external environmental factors, thereby reducing the risk of weathering and corrosion and extending its service life and operational safety.

In some embodiments, the first accommodating cavity includes a first cavity and a second cavity, the first cavity is isolated from or communicates with the second cavity, and the first cavity further communicates with the first opening;
the first locking mechanism includes a first mounting base, a first locking rod, a first lock head, and a first handle, the first mounting base is located in the second cavity and fixedly connected to the first door panel, the first locking rod is located in both the first cavity and the second cavity, the first locking rod passes through the first mounting base and is rotatably connected to the first mounting base, the first lock head is located in the second cavity and fixedly connected to the first locking rod, the first lock head is capable of engaging with or disengaging from the second locking mechanism, and the first handle is located in the first cavity and fixedly connected to the first locking rod, and the first handle is capable of driving the first locking rod to rotate relative to the first mounting base.

In some embodiments, the first door panel includes a first inner panel, a first outer panel, and a first waterproof member, the first inner panel and the first outer panel surround to form the first accommodating cavity, the first waterproof member is connected between the first inner panel and the first outer panel and divides the first accommodating cavity into a first cavity and a second cavity, the first locking rod passes through the first waterproof member and extends along a height direction of the first door panel.

In some embodiments, the first waterproof member communicates with the exterior of the energy storage container through the first opening;
the door panel assembly further includes a first press plate and a first sealing ring, both the first press plate and the first sealing ring are located within the second cavity, the first press plate is sleeved on the first locking rod and abuts against the first waterproof member, the first sealing ring is sleeved on the first locking rod and elastically abuts between the first press plate and the first waterproof member.

In some embodiments, the first waterproof member includes a first waterproof member body and a first sealing plate, the first waterproof member body forms the first cavity by enclosing, the first sealing plate is circumferentially connected to an outer edge of the first waterproof member body, the first sealing plate is further fixedly connected to the first outer panel, a projection of the first sealing plate on the first outer panel along the thickness direction of the first door panel is entirely located within the first outer panel; and
the first door panel further includes a first pad, the first pad is connected between the first sealing plate and the first outer panel.

In some embodiments, the first door panel further includes a first waterproof cover, the first waterproof cover is rotatably connected to the first outer panel;
when the door panel assembly is in the first state, the first waterproof cover is closed, sealing the first opening, and the first waterproof member is isolated from the exterior the energy storage container; and
when the door panel assembly is in the second state, the first waterproof cover is open, exposing the first opening, and the first waterproof member communicates with the exterior the energy storage container through the first opening.

In some embodiments, the first waterproof member includes a first waterproof member body and a first sealing plate, the first waterproof member body forms the first cavity by enclosing, the first sealing plate is circumferentially connected to an outer edge of the first waterproof member body, the first sealing plate is further fixedly connected to the first outer panel, a projection of the first sealing plate on the first inner panel along the thickness direction of the first door panel partially overlaps a projection of the first outer panel on the first inner panel along the thickness direction of the first door panel; and
the first door panel further includes a first pad, and the first pad is connected to the first sealing plate and located between the first sealing plate and the first waterproof cover.

In some embodiments, the first lock assembly further includes a first latch, the first latch is located within the first cavity and rotatably connected to the first waterproof member or the first inner panel, and the first latch is capable of engaging with or disengaging from the first handle.

In some embodiments, the first door panel further includes a second surface and a second opening, the second surface is configured to face interior of the energy storage container and disposed opposite to and facing away from the first surface in the thickness direction of the first door panel, and the second opening is located on the second surface; and
the second locking mechanism includes a first fixing member and a first lock base connected together, the first fixing member is located outside the first door panel, the first lock base is located within the second cavity and exposed by the second opening, and the first lock base is capable of engaging with or disengaging from the first lock head.

In some embodiments, the door frame includes a first frame body and a second frame body connected with each other, the first frame body extends along a width direction of the first door panel, the second frame body extends along a height direction of the first door panel, and the second locking mechanism is fixedly connected to the first frame body;
the door panel assembly further includes a first hinge component, a part of the first hinge component is located within the second frame body, the first door panel is rotatably connected to the second frame body via the first hinge component.

In some embodiments, the first hinge component includes a first hinge and a first base, the first base is fixedly connected to the second frame body, at least a part of the first base is located within the second frame body, one end of the first hinge is rotatably connected to the first base, and the other end of the first hinge is fixedly connected to the first door panel.

In some embodiments, a dimension occupied by a part of the first base embedded within the second frame body in a thickness direction of the second frame body is greater than a dimension occupied by a part of the first base protruding outward from the second frame body in the thickness direction of the second frame body.

In some embodiments, the first base includes a first box body, a first shaft, a first baffle, and a second baffle; the first box body is embedded in the second frame body; the first baffle and the second baffle are respectively connected to two opposite sides of the first box body; at least a part of the first baffle and at least a part of the second baffle are located outside the second frame body; the first shaft is connected between the first baffle and the second baffle; the first hinge is sleeved on the first shaft and is rotatable relative to the first shaft;
a dimension of an end of the first baffle away from the first box body along a width direction of the second frame body is less than a dimension of an end of the first baffle connected to the first box body along the width direction of the second frame body; and/or, a dimension of an end of the second baffle away from the first box body along the width direction of the second frame body is less than a dimension of an end of the second baffle connected to the first box body along the width direction of the second frame body.

In some embodiments, the first box body is provided with a first receiving groove, and a part of the first hinge is located within the first receiving groove.

In some embodiments, the first box body, the first shaft, the first baffle, and the second baffle are connected to form an integral structure.

According to a second aspect of the present application, there is provided an energy storage container, where the energy storage container includes a container body and the door panel assembly as described above, and the door panel assembly is connected to the container body.

### BRIEF DESCRIPTION OF THE DRAWINGS

FIG. 1 is a structural schematic diagram of an energy storage container provided in an embodiment of the present disclosure;
FIG. 2 is a structural schematic diagram of a partial structure of a door panel assembly provided in a first embodiment of the present disclosure;
FIG. 3 is a first cross-sectional schematic diagram of a partial structure of the door panel assembly obtained by cutting along section line A-A shown in FIG. 2;
FIG. 4a is a structural schematic diagram of a first door panel of the door panel assembly shown in FIG. 2 from an angle;
FIG. 4b is an exploded schematic diagram of the first door panel shown in FIG. 4a;
FIG. 5 is a cross-sectional schematic diagram of a partial structure of the first door panel obtained by cutting along section line B-B shown in FIG. 4a;
FIG. 6 is a structural schematic diagram of a first outer panel of the first door panel shown in FIG. 4a from an angle;
FIG. 7 is a structural schematic diagram of a first inner panel of the first door panel shown in FIG. 4a from an angle;
FIG. 8 is a structural schematic diagram of a first waterproof member of the first door panel shown in FIG. 4b from an angle;
FIG. 9 is a structural schematic diagram of a first pad of the first door panel shown in FIG. 4a from an angle;
FIG. 10a is a structural schematic diagram of a first locking assembly of the door panel assembly shown in FIG. 2 from an angle.
FIG. 10b is an exploded view of the first locking assembly shown in FIG. 10a.
FIG. 11 is a structural schematic diagram of a partial structure of the door panel assembly shown in FIG. 2 from a first angle.
FIG. 12 is a second cross-sectional view of a partial structure of the door panel assembly obtained by cutting along section line C-C shown in FIG. 2.
FIG. 13 is a third cross-sectional view of a partial structure of the door panel assembly obtained by cutting along section line D-D shown in FIG. 2.
FIG. 14a is a structural schematic diagram of a first mounting base of the door panel assembly shown in FIG. 2 from an angle.
FIG. 14b is an exploded view of the first mounting base shown in FIG. 14a.
FIG. 14c is a structural schematic diagram of a partial structure of a first locking mechanism of the first locking assembly shown in FIG. 10a from an angle.
FIG. 15 is a structural schematic diagram of the partial structure of the door panel assembly shown in FIG. 2 from a second angle.
FIG. 16 is an enlarged view of region N in FIG. 12.
FIG. 17 shows a structural schematic diagram of a partial structure of the door panel assembly shown in FIG. 2 from a third angle.
FIG. 18 is a structural schematic diagram of a first lock head of the first lock assembly shown in FIG. 10a from an angle;
FIG. 19 is a structural schematic diagram of the partial structure of the door panel assembly shown in FIG. 2 from a fourth angle;
FIG. 20 is a structural schematic diagram of the partial structure of the door panel assembly shown in FIG. 2 from a fifth angle;
FIG. 21 is a structural schematic diagram of a first lock base of the first lock assembly shown in FIG. 10a from an angle ;
FIG. 22 is a schematic diagram of the first lock base and first lock head of the first lock assembly shown in FIG. 10a in a state after assembly;
FIG. 23 is a structural schematic diagram of the partial structure of the door panel assembly shown in FIG. 2 from a sixth angle;
FIG. 24a is a structural schematic diagram of a first hinge component of the door panel assembly shown in FIG. 2;
FIG. 24b is an exploded view of the first hinge component shown in FIG. 24a;
FIG. 25 is a fourth cross-sectional view of a partial structure of the door panel assembly obtained by cutting along the section line E-E shown in FIG. 2;
FIG. 26 is another structural schematic diagram of the first hinge component of the door panel assembly shown in FIG. 2;
FIG. 27 is another structural schematic diagram of a partial structure of the panel assembly according to the second embodiment of the present disclosure;
FIG. 28 is a structural schematic diagram of a partial structure of the door panel assembly shown in FIG. 27 from a first angle;
FIG. 29 is a fifth cross-sectional schematic diagram of a partial structure of the door panel assembly obtained by cutting along the section line F-F shown in FIG. 28;
FIG. 30 is another structural schematic diagram of the first waterproof member of the first door panel shown in FIG. 29 from an angle;
FIG. 31 is a structural schematic diagram of the partial structure of the door panel assembly shown in FIG. 27 from a second angle;
FIG. 32 is a structural schematic diagram of the partial structure of the door panel assembly shown in FIG. 27 from a third angle;
FIG. 33 is a structural schematic diagram of a first connecting member of the first door panel shown in FIG. 28 from an angle;
FIG. 34 is a structural schematic diagram of a first reinforcing member of the first door panel shown in FIG. 32 from an angle;
FIG. 35 is a structural schematic diagram of the partial structure of the door panel assembly shown in FIG. 27 from a fourth angle.

### Reference numerals:

Energy storage container 200, container body 210, door panel assembly 100, door frame 10, first door panel 20, first lock assembly 30, first hinge component 40, second door panel 50a, second lock assembly 50b, second hinge component 50c, sealing strip 60, hasp 50d, first waterproof member 70, first press plate 80a, first sealing ring 80b, first pad 80c, first latch 90, first frame body 11, second frame body 12, first accommodating cavity 21, first outer panel 22, first inner panel 23, first cavity 211, second cavity 212, first base plate 221, first border 222, first surface 2211, first opening 2212, second surface 231, second opening 232, first surrounding plate 24, first bottom plate 241, first side plate 242, first through hole 2411, first locking mechanism 31, second locking mechanism 32, first mounting base 311, first locking rod 312, first lock head 313, first handle 314, first protective ring 315, first mounting base body 3111, first bracket 3112, first bracket base 3113, first limiting member 3114, first mounting hole 3111a, first bracket body 3112a, first bracket protrusion 3112b, first mounting groove 3112c, first limiting hole 3112d, first lock head body 3131, first intermediate part 3132, first connecting rod 3133, first connecting part 3131a, second connecting part 3131b, third connecting part 3131c, first notch 3131d, second notch 3131e, first fixing member 321, first lock base 322, first mating part 3221, second mating part 3222, third mating part 3223, fourth mating part 3224, third surface 3221a, fourth surface 3221b, first hinge 41, first base 42, third end 411, fourth end 412, first ear hole 413, first mating groove 414, first box body 421, first shaft 422, first baffle 423, second baffle 424, fifth surface 4211, sixth surface 4212, first receiving groove 4213, first sealing part 61, second sealing part 62, third sealing part 63, first waterproof member body 71, first sealing plate 72, second base plate 711, second border 712, second through hole 713, first groove 81a, first hole 82a, first end 91, second end 92, outer diameter D1 of first locking rod 312, inner diameter D2 of first locking rod 312, dimension H1 of the portion of first base 42 embedded in second frame body 12 along the thickness direction of second frame body 12, dimension H2 of the portion of first base 42 protruding outward second frame body 12 along the thickness direction of second frame body 12, first accommodating groove 721, first waterproof cover 80d, first connecting member 80e, first fixing part 81e, second fixing part 82e, first rotating shaft 83e, first reinforcing member 80f, first bent part 81f, first straight part 82f, third through hole 73, first fixing plate 74, second latch 80g.

### DETAILED DESCRIPTION

To facilitate understanding, the terminology used in the embodiments of the present disclosure is first explained.

"And/or": This merely describes the relationship between related objects, indicating that three relationships can exist. For example, A and/or B can represent: A existing alone, A and B existing simultaneously, or B existing alone.

"Multiple": This refers to two or more objects.

"Connection": This should be interpreted broadly. For example, A and B are connected, which could mean A and B are directly connected, or A and B are indirectly connected through an intermediate medium.

The technical solutions in the embodiments of the present disclosure will be clearly and completely described below with reference to the accompanying drawings. It should be noted that the described embodiments are only a part of the embodiments of the present disclosure, not all of them. All other embodiments obtained by those skilled in the art based on the embodiments of the present disclosure without inventive effort are within the scope of protection of the present disclosure.

The embodiments of the present disclosure provide a door panel assembly and an energy storage container.

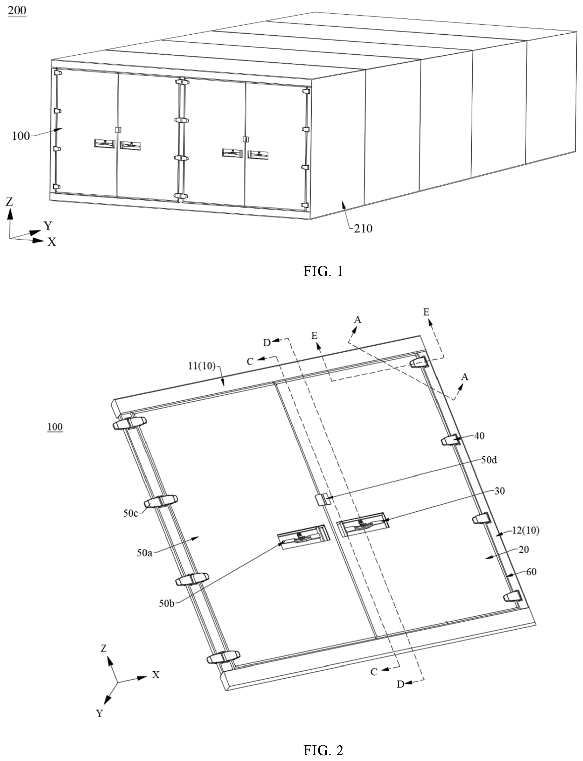

Please refer to FIG. 1. FIG. 1 is a structural schematic diagram of an energy storage container 200 provided in an embodiment of the present disclosure.

For ease of description, the width direction of the energy storage container 200 is defined as the X direction, the thickness direction as the Y direction, and the height direction as the Z direction. The X, Y, and Z directions are mutually perpendicular.

The energy storage container 200 may include a container body 210 and a door panel assembly 100. The door panel assembly 100 is connected to the container body 210 and together with the container body 210, forms the accommodating space of the energy storage container 200. There may be one or more energy storage containers 200. When there are multiple energy storage containers 200, they can be stacked.

It should be noted that FIG. 1 is only intended to schematically illustrate the connection relationship between the container body 210 and the door panel assembly 100, and is not intended to specifically limit the connection positions, specific structures, or quantities of respective devices. In other embodiments of the present disclosure, the energy storage container 200 may include more or fewer components than shown in the figure, or combine some components, or split some components, or have different component arrangements. The illustrated components can be implemented in hardware, software, or a combination of both.

The structure of the door panel assembly 100 will be described in detail below through two specific embodiments.

### First Embodiment:

Please refer to FIG. 2, which is a schematic structural diagram of a partial structure of the door panel assembly 100 provided in the first embodiment of the present disclosure.

The door panel assembly 100 may include a door frame 10, a first door panel 20, a first lock assembly 30, and a first hinge component 40. The first door panel 20 is rotatably connected to the door frame 10 via the first hinge component 40. A first accommodating cavity is provided inside the first door panel 20. At least a part of the first lock assembly 30 is located within the first accommodating cavity. The first lock assembly 30 is also connected between the door frame 10 and the first door panel 20. The first lock assembly 30 is configured to control the opening and closing of the first door panel 20.

It should be noted that FIG. 2 is only intended to schematically illustrate the connection relationship between the door frame 10, the first door panel 20, the first lock assembly 30, and the first hinge component 40 on the door panel assembly 100, and is not intended to specifically limit the connection positions, specific structures, or quantities of respective devices. In other embodiments of the present disclosure, the door panel assembly 100 may include more or fewer components than shown, or combine some components, or split some components, or have different component arrangements. The components shown can be implemented in hardware, software, or a combination of software and hardware.

Referring to FIG. 2, in this embodiment, the door panel assembly 100 may further include a second door panel 50a, a second lock assembly 50b, and a second hinge component 50c. The second door panel 50a is rotatably connected to the door frame 10 via the second hinge component 50c. The second door panel 50a has a second accommodating cavity inside. At least a part of the second lock assembly 50b is located within the second accommodating cavity. The second lock assembly 50b is also connected between the door frame 10 and the second door panel 50a. The second lock assembly 50b is configured to control the opening and closing of the second door panel 50a.

The second door panel 50a can form a double-door structure with the first door panel 20. Specifically, the side of the first door panel 20 away from the second door panel 50a is rotatably connected to the door frame 10 via the first hinge component 40. During the opening of the first door panel 20, the distance between the side of the first door panel 20 close to the second door panel 50a and the container body 210 can be changed. That is, the side of the first door panel 20 close to the second door panel 50a is the free side. The side of the second door panel 50a away from the first door panel 20 is rotatably connected to the door frame 10 via the second hinge component 50c. During the opening of the second door panel 50a, the distance between the side of the second door panel 50a close to the first door panel 20 and the container body 210 can be changed. That is, the side of the second door panel 50a close to the first door panel 20 is the free side. Alternatively, both the second door panel 50a and the first door panel 20 can be single-door structures. That is, the second door panel 50a and the first door panel 20 are separated by the door frame 10.

The following description will use the example of the first door panel 20 opening and closing relative to the door frame 10 via the first lock assembly 30 and rotating relative to the door frame 10 via the first hinge component 40 to illustrate the structure of each door panel, each lock assembly, and each hinge component in the door panel assembly 100. Furthermore, unless otherwise specified, the descriptions of the structure of the first door panel 20, the first lock assembly 30, and the first hinge component 40 can be applied to other door panels, lock assemblies, and hinge components.

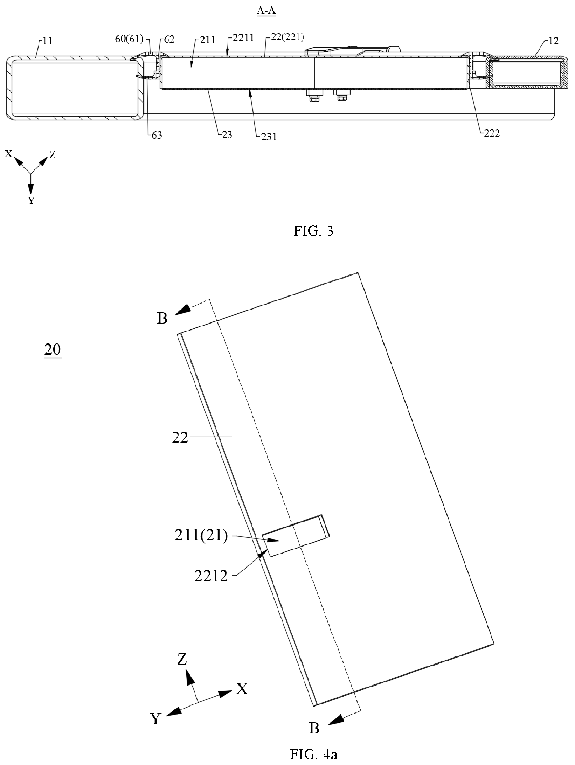

Please refer to FIG. 2 and FIG. 3. FIG. 3 is a first cross-sectional view of the partial structure of the door panel assembly 100 obtained by cutting along the section line A-A shown in FIG. 2. The door frame 10 is fixedly connected to the container body 210. The door frame 10 may include a first frame body 11 and a second frame body 12.

The number of first frames 11 can be two. Two first frames 11 are spaced apart along the height direction (Z direction in the figure) of the door panel assembly 100. Each first frame body 11 extends along the width direction (X direction in the figure) of the door panel assembly 100. There can be two second frames 12. The two second frames 12 are spaced apart along the width direction of the first door panel 20. Each second frame body 12 extends along the height direction of the door panel assembly 100. Both ends of each second frame body 12 are connected to the two first frames 11 respectively. One first frame body 11, one second frame body 12, another first frame body 11, and another second frame body 12 are sequentially connected and together surround the first door panel 20 and the second door panel 50a.

The first frame body 11 and second frame body 12 can be connected to form an integral structure. That is, the door frame 10 can be an integral structure. For example, the first frame body 11 and second frame body 12 can be connected in a manner such as integral molding to form an integral structure. Alternatively, the first frame body 11 and the second frame body 12 can be separate structures, fixed together by assembly. That is, the door frame 10 can be a separate structure. For example, the first frame body 11 and the second frame body 12 can be connected to form an integral structure by means such as welding, bonding, or snap-fitting.

Referring to FIG. 2 and FIG. 3, both the first frame body 11 and the second frame body 12 can be hollow structures. This allows the first frame body 11 and the second frame body 12 to reduce material usage and save production costs while maintaining strength. The thickness of the second frame body 12 (the dimension along the Y direction in the figures) can be less than the thickness of the first frame body 11 (the dimension along the Y direction in the figures).

In other embodiments, the second frame body 12 and/or the first frame body 11 can also be solid structures. The thickness of the second frame body 12 can also be equal to or greater than the thickness of the first frame body 11. There are no limitations on this.

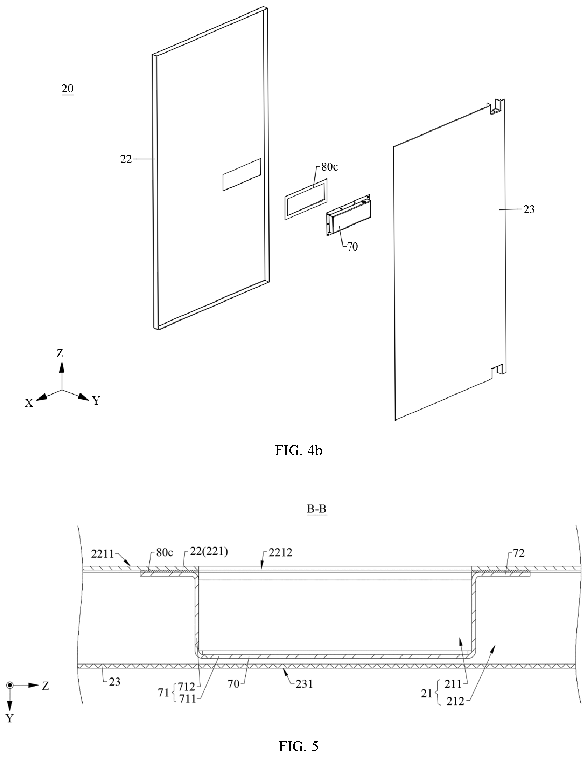

Please refer to FIGs. 4a, 4b, and 5. FIG. 4a is a structural schematic diagram of the first door panel 20 of the door panel assembly 100 shown in FIG. 2 from one angle. FIG. 4b is an exploded view of the first door panel 20 shown in FIG. 4a. FIG. 5 is a cross-sectional schematic diagram of a partial structure of the first door panel 20 obtained by cutting along the section line B-B shown in FIG. 4a.

The first door panel 20 may have a first accommodating cavity 21. The first accommodating cavity 21 may include a first cavity 211 and a second cavity 212. The first cavity 211 and the second cavity 212 are isolated from each other. That is, the first cavity 211 and the second cavity 212 are independent of each other and do not communicate with each other. Specifically, the first door panel 20 may include a first outer panel 22, a first inner panel 23, and a first waterproof member 70. The first outer panel 22 and the first inner panel 23 are arranged sequentially in the thickness direction (Y direction in the figure) of the first door panel 20. The first outer panel 22 is close to the exterior of the energy storage container 200. The first inner panel 23 is close to the interior of the energy storage container 200. The first outer panel 22 and the first inner panel 23 form the first accommodating cavity 21 of the first door panel 20. The first waterproof member 70 is connected between the first inner panel 23 and the first outer panel 22, and divides the first accommodating cavity 21 of the first door panel 20 into the first cavity 211 and the second cavity 212 as described above.

The first outer panel 22, the first inner panel 23, and the first waterproof member 70 can be connected to form an integral structure. That is, the first door panel 20 can be an integral structure. For example, the first outer panel 22, the first inner panel 23, and the first waterproof member 70 can be connected to form an integral structure by means such as integral molding. Alternatively, the first outer panel 22, the first inner panel 23, and the first waterproof member 70 can be separate structures and fixed together by assembly. For example, the first outer panel 22, the first inner panel 23, and the first waterproof member 70 can be fixed together by assembly methods such as welding, bonding, screwing, snap-fitting, etc. Unless otherwise specified, the separate structures described below can all be fixed together by assembly methods such as welding, bonding, screwing, and snap-fitting. The integral structures described below can all be connected together by means such as integral molding. Further details will not be provided.

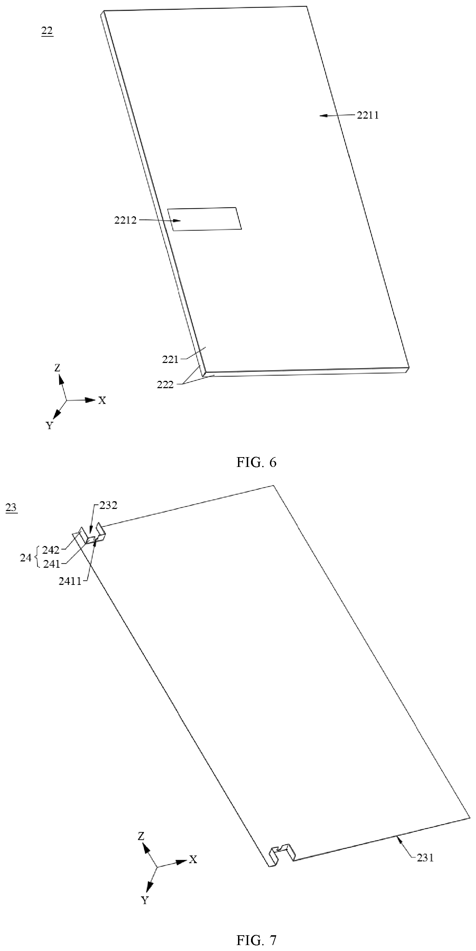

Please refer to FIGs. 4b, 5, and 6. FIG. 6 is a structural schematic diagram of the first outer panel 22 of the first door panel 20 shown in FIG. 4a from one angle.

The first outer panel 22 may include a first surface 2211 and a first opening 2212. The first surface 2211 faces the exterior of the energy storage container 200. The first opening 2212 is located on the first surface 2211 and communicates with the first cavity 211 of the first accommodating cavity 21, but is isolated from the second cavity 212 of the first accommodating cavity 21.

The first outer panel 22 may also include a first base plate 221 and a first border 222. The first border 222 surrounds and is connected to the outer periphery of the first base plate 221 and extends inward relative to the first base plate 221 toward the interior of the energy storage container 200. The first border 222 may be arranged substantially perpendicular to the first base plate 221. The first base plate 221 has the first surface 2211 and the first opening 2212 described above. The first surface 2211 is the surface of the first base plate 221 facing the exterior of the energy storage container 200.

Refer to FIGs. 4b, 5, and 7. FIG. 7 is a schematic structural diagram of the first inner panel 23 of the first door panel 20 shown in FIG. 4a from one angle.

The first inner panel 23 covers the first outer panel 22 and, together with the first outer panel 22, forms the external structure of the first door panel 20. Specifically, the first inner panel 23 is connected to the end of the first border 222 facing away from the first substrate 221, and together with the first border 222 and the first base plate 221, forms the first accommodating cavity 21 described above. The first door panel 20 may include a second surface 231 and a second opening 232. The second surface 231 faces the interior of the energy storage container 200. The second surface 231 and the first surface 2211 are disposed opposite to and facing away from each other in the thickness direction of the first door panel 20, and both are external surfaces of the first door panel 20. The second opening 232 is located on the second surface 231 and communicates with the second cavity 212 of the first accommodating cavity 21, but is isolated from the first cavity 211 of the first accommodating cavity 21. The second opening 232 may also penetrate the edge of the second surface 231 close to the first frame body 11.

The number of second openings 232 may be one or two. When there are two second openings 232, in the height direction (Z direction in the figure) of the first inner panel 23, the two second openings 232 are respectively located at both ends of the first inner panel 23.

The first door panel 20 may also include a first surrounding plate 24. The first surrounding plate 24 is located within the second cavity 212 of the first accommodating cavity 21 and surrounds and connects to the edge of the second opening 232. The end of the first surrounding plate 24 away from the second opening 232 is connected to the first outer panel 22. The first surrounding plate 24 and the first inner panel 23 can be connected to form an integral structure. Alternatively, the first surrounding plate 24 and the first inner panel 23 are separate structures and are fixed together by assembly.

The first surrounding plate 24 may include a first bottom plate 241 and two first side plates 242. In the width direction (X direction in the figure) of the first surrounding plate 24, the two first side plates 242 are respectively connected to both ends of the first bottom plate 241. The first bottom plate 241 may be provided with a first through hole 2411. The first through hole 2411 penetrates the first bottom plate 241 along the thickness direction of the first bottom plate 241 (Z direction in the figure).

The number of first surrounding plates 24 can be the same as the number of second openings 232. That is, the number of first surrounding plates 24 can be one or two. When there are two first surrounding plates 24, each first surrounding plate 24 surrounds and connects to the outer edge of one second opening 232.

In this embodiment, referring to FIG. 3, the thickness of the first door panel 20 can be less than the thickness of the first frame body 11. That is, the distance between the first surface 2211 and the second surface 231 is less than the thickness of the first frame body 11. This allows the first door panel 20 to minimize the space occupied by the door panel assembly 100 in the thickness direction (Y direction in the figure), providing more internal space for the energy storage container 200.

It should be noted that the thickness of the first door panel 20 can be greater than, less than, or equal to the thickness of the second frame body 12. This embodiment does not limit the relationship between the thickness of the first door panel 20 and the thickness of the second frame body 12.

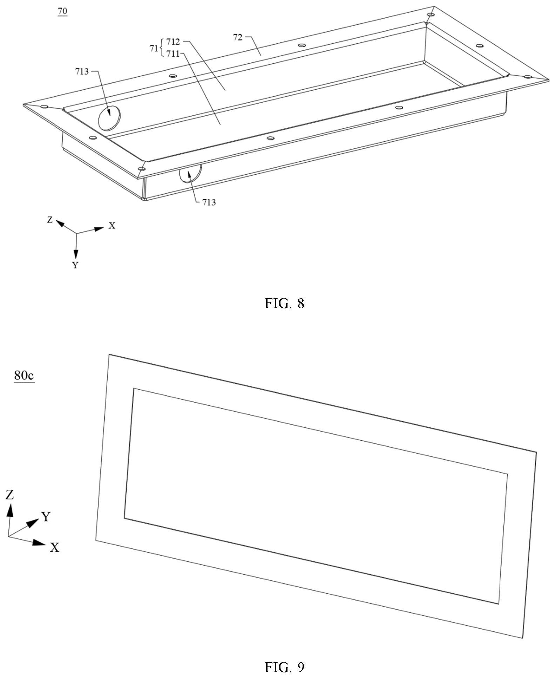

Please refer to FIG. 5 and FIG. 8. FIG. 8 is a structrual schematic diagram of the first waterproof member 70 of the first door panel 20 shown in FIG. 4b from one angle.

The first waterproof member 70 can communicate with the first opening 2212 on the first outer panel 22 to achieve external communication with the energy storage container 200. That is, the first waterproof member 70 can communicate with the external of the energy storage container 200 through the first opening 2212 on the first outer panel 22. Specifically, the first waterproof member 70 may include a first waterproof member body 71 and a first sealing plate 72. The first waterproof member body 71 may include a second base plate 711 and a second border 712. The second border 712 is connected around the outer periphery of the second base plate 711 and extends towards the first outer panel 22 relative to the second base plate 711. The second base plate 711 may be spaced apart from or abut against the first inner panel 23 in the thickness direction of the first door panel 20. The first sealing plate 72 is connected around the end of the second border 712 away from the second base plate 711 to achieve a fixed connection between the first sealing plate 72 and the first waterproof member body 71. That is, the first sealing plate 72 can be an annular structure. The first sealing plate 72 is also fixedly connected to the first outer panel 22 to achieve a fixed connection between the first waterproof member 70 and the first door panel 20. The projection of the first sealing plate 72 on the first outer panel 22 along the thickness direction (Y direction in the figure) of the first outer panel 22 is entirely within the first outer panel 22.

The first waterproof member body 71 can be a box structure. The space enclosed by the first waterproof member body 71 is the first cavity 211 of the first door panel 20. That is, the second base plate 711 and the second border 712 divide the first accommodating cavity 21 into the first cavity 211 and the second cavity 212 described above. The second base plate 711, the second border 712, and the first sealing plate 72 can be connected to form an integral structure. That is, the first waterproof member 70 can be an integral structure. Alternatively, the second base plate 711, the second border 712, and the first sealing plate 72 can be separate structures, and fixed together by assembly.

In some other embodiments, the first waterproof member body 71 may not have a second base plate 711, but can instead be a single annular hollow structural member. In this case, the first waterproof member body 71 can be directly fixedly connected to the first inner panel 23. The connection method between the first waterproof member body 71 and the first inner panel 23 can refer to the connection method between the first waterproof member body 71 and the first outer panel 22. That is, the first waterproof member body 71 can be fixedly connected to the first inner panel 23 via another first sealing plate 72.

In this embodiment, the first waterproof member body 71 may have a second through hole 713. The second through hole 713 penetrates the second border 712 along the thickness direction (Z direction in the figure) of the second border 712 and communicates with the first cavity 211 of the first accommodating cavity 21. There may be two second through holes 713. The two second through holes 713 are coaxially arranged and both communicate with the first cavity 211 of the first door panel 20.

It is understandable that by providing a first waterproof member 70 within the first door panel 20, rainwater and seawater can be prevented from entering the energy storage container 200 through the first opening 2212 on the first outer panel 22, thus avoiding damage to the internal cargo and the first locking assembly 30, thereby achieving waterproof performance of the energy storage container 200. Furthermore, the first waterproof member 70 enhances the sealing performance of the energy storage container 200, helping to prevent the impact of dust, smog, and other environmental factors on the interior of the energy storage container 200. In addition, by providing the first sealing plate 72 on the first waterproof member 70 to achieve a fixed connection between the first waterproof member 70 and the first door panel 20, the contact area at the sealing point between the first waterproof member 70 and the first door panel 20 is increased, resulting in better sealing between the first waterproof member 70 and the first door panel 20.

In one possible implementation, please refer to FIGs. 5 and 9. FIG. 9 is a structural schematic diagram of a first pad 80c of the first door panel 20 shown in FIG. 4a from one angle.

The first door panel 20 may further include the first pad 80c. The first pad 80c is connected between the first sealing plate 72 of the first waterproof member 70 and the first outer panel 22 to further enhance the sealing performance between the first waterproof member 70 and the first outer panel 22. The first pad 80c may be shaped to match the first sealing plate 72 for better fit. That is, the first pad 80c may be annular.

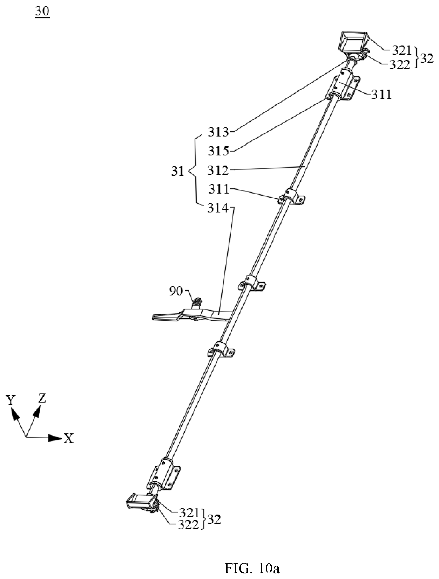

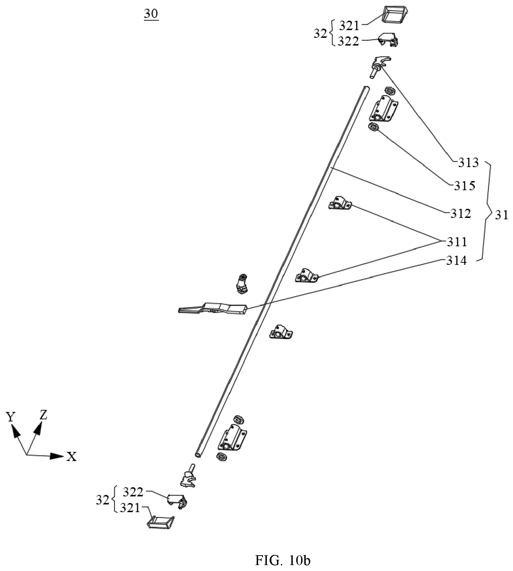

Refer to FIGs. 10a and 10b. FIG. 10a is a structural schematic diagram of the first lock assembly 30 of the door panel assembly 100 shown in FIG. 2 from one angle, and FIG. 10b is an exploded schematic diagram of the first lock assembly 30 shown in FIG. 10a.

The first lock assembly 30 may include a first locking mechanism 31 and a second locking mechanism 32. The first locking mechanism 31 can lock with the second locking mechanism 32 to close the first door panel 20 to the first frame body 11 of the door frame 10. Alternatively, the first locking mechanism 31 can unlock from the second locking mechanism 32, allowing the first door panel 20 to rotate relative to the first frame body 11 of the door frame 10.

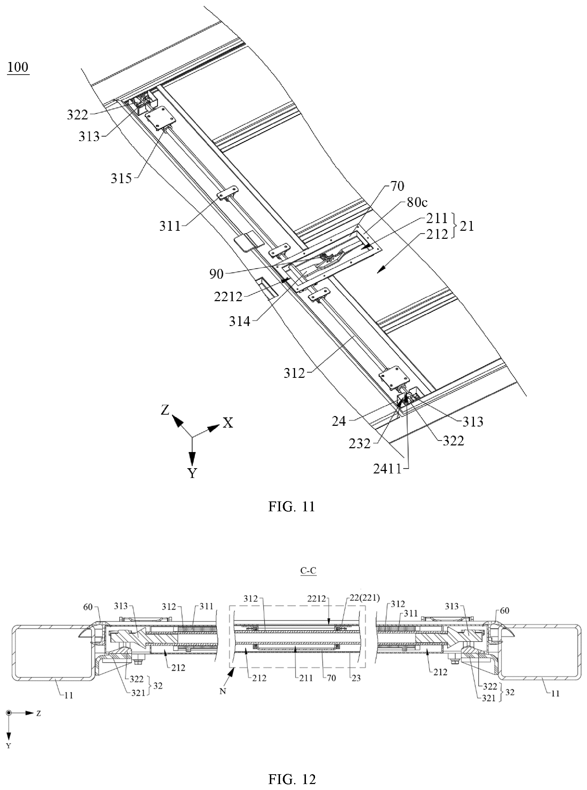

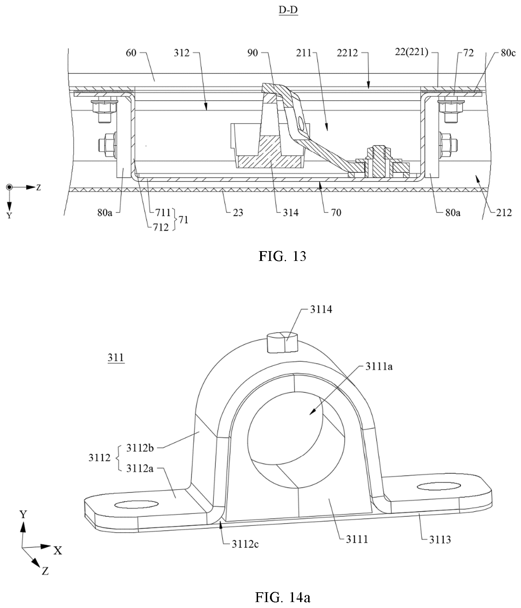

Please refer to FIGs. 10b, 11, 12, and 13. FIG. 11 is a structrual schematic diagram of a partial structure of the door panel assembly 100 shown in FIG. 2 from a first angle; FIG. 12 is a second cross-sectional view of a partial structure of the door panel assembly 100 obtained by cutting along section line C-C shown in FIG. 2; and FIG. 13 is a third cross-sectional view of a partial structure of the door panel assembly 100 obtained by cutting along section line D-D shown in FIG. 2.

The first locking mechanism 31 is located within the first accommodating cavity 21 and is rotatably connected to the first door panel 20. A part of the first locking mechanism 31 is exposed through the first opening 2212 of the first door panel 20. That is, in the thickness direction of the first door panel 20, a part of the first locking mechanism 31 is disposed opposite to the first opening 2212 of the first door panel 20. Specifically, the first locking mechanism 31 may include a first mounting base 311, a first locking rod 312, a first lock head 313, and a first handle 314. The first mounting base 311 is located within the second cavity 212 of the first accommodating cavity 21 and is fixedly connected to the first outer panel 22 of the first door panel 20. The first locking rod 312 is located within the first cavity 211 and the second cavity 212 of the first door panel 20. The first locking rod 312 passes through the first mounting base 311 and is rotatably connected to the first mounting base 311. A part of the first locking rod 312 is exposed through the first opening 2212 of the first door panel 20. The first lock head 313 is located within the second cavity 212 of the first door panel 20 and is fixedly connected to the first lock rod 312. The first lock head 313 can engage or disengage with the second locking mechanism 32 to achieve locking and unlocking of the first locking mechanism 31 and the second locking mechanism 32. The first handle 314 is located within the first cavity 211 of the first door panel 20 and is exposed by the first opening 2212 of the first door panel 20. The first handle 314 is fixedly connected to the first lock rod 312. The first handle 314 can drive the first lock rod 312 to rotate relative to the first mounting base 311.

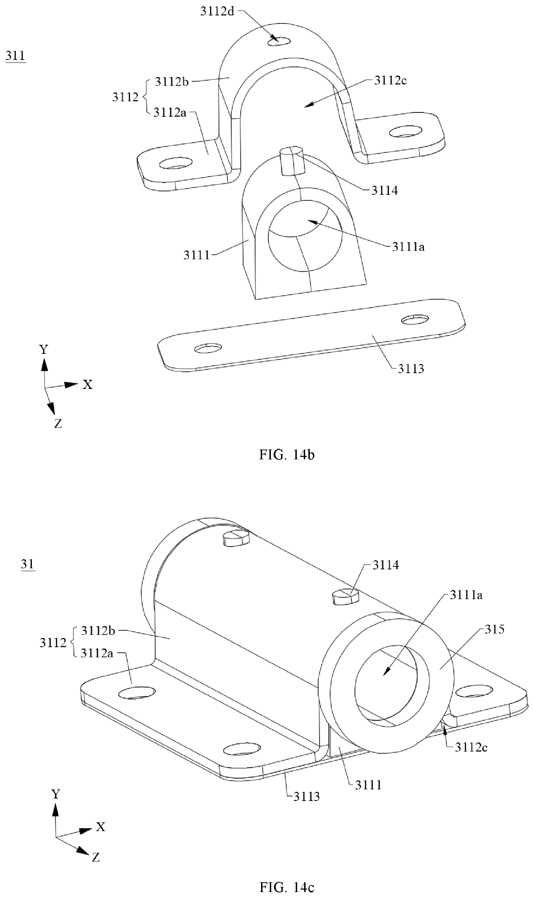

Please refer to FIGs. 11, 14a, and 14b. FIG. 14a is a structural schematic diagram of the first mounting base 311 of the door panel assembly 100 shown in FIG. 2 from one angle. FIG. 14b is an exploded schematic diagram of the first mounting base 311 shown in FIG. 14a.

The first mounting base 311 may include a first mounting base body 3111, a first bracket 3112, and a first bracket base 3113. The first bracket base 3113 is fixedly connected to the first outer panel 22 of the first door panel 20. The first bracket 3112 is fixedly connected to the first bracket base 3113, and together they form an accommodating space. The first mounting base body 3111 is located within this accommodating space and is fixedly connected to the first bracket 3112 and the first bracket base 3113. The first mounting base body 3111, the first bracket 3112, and the first bracket base 3113 can be separate structures, and are fixed together by assembly. Alternatively, the first mounting base body 3111, the first bracket 3112, and the first bracket base 3113 can be connected to form an integral structure. That is, the first mounting base 3111 is an integral structure.

The first mounting base body 3111 may be provided with a first mounting hole 3111a. The first mounting hole 3111a can penetrate the first mounting base body 3111 along the thickness direction (Z direction in the figure) of the first mounting base body 3111. The first mounting base body 3111 can be connected to form an integral structure. Alternatively, the first mounting base body 3111 can also be a separate structure.

The first mounting base 311 may further include a first limiting member 3114. The first limiting member 3114 is fixedly connected to the outer surface of the first mounting base body 3111. The first limiting member 3114 can be connected to the first mounting base body 3111 to form an integral structure. Alternatively, the first limiting member 3114 and the first mounting base body 3111 can also be separate structures. There can be multiple first limiting members 3114. Multiple first limiting members 3114 are spaced apart on the outer surface of the first mounting base body 3111.

The first bracket 3112 may include a first bracket body 3112a and a first bracket protrusion 3112b. The first bracket protrusion 3112b protrudes towards the first inner panel 23 relative to the first bracket body 3112a. The first bracket body 3112a is fixedly connected to the first bracket base 3113. The first bracket body 3112a and the first bracket protrusion 3112b can be connected to form an integral structure. That is, the first bracket 3112 can be an integral structure.

The first bracket 3112 may be provided with a first mounting groove 3112c and a first limiting hole 3112d. The opening of the first mounting groove 3112c is located on the surface of the first bracket 3112 facing toward the first bracket base 3113. The first mounting groove 3112c can be formed by recessing from the surface of the first bracket 3112 facing toward the first bracket base 3113 into the interior of the first bracket body 3112a and the first bracket protrusion 3112b. The first mounting groove 3112c is configured to accommodate the first mounting base body 3111. The first limiting hole 3112d can penetrate the first bracket protrusion 3112b and communicate with the first mounting groove 3112c. The first limiting hole 3112d is configured to accommodate the first limiting member 3114, thereby achieving a fixed connection between the first bracket 3112 and the first mounting base body 3111. There can be multiple first limiting holes 3112d. Each first limiting member 3114 accommodates one first limiting member 3114.

The number of first mounting bases 311 can be one or more. When there are multiple first mounting bases 311, their structures can be similar, identical, or different. Multiple first mounting bases 311 can be spaced apart in the height direction of the first door panel 20. Each first mounting base 311 is sleeved on the first locking rod 312 and fixedly connected to the first outer panel 22 of the first door panel 20.

In one possible embodiment, please refer to FIGs. 11 and 14c. FIG. 14c is a structrual schematic diagram of a partial structure of the first locking mechanism 31 of the first lock assembly 30 shown in FIG. 10a from one angle.

The first locking mechanism 31 may also include a first protective ring 315. The first protective ring 315 can be connected to a first mounting base 311 and sleeved on the first locking rod 312. There can be one or more first protective rings 315. When there are multiple first protective rings 315, their structures can be similar, identical, or different. Each first protective ring 315 is connected to a first mounting base 311 and sleeved on the first locking rod 312. For example, as shown in FIG. 14c, each first mounting base 311 has a first protective ring 315 connected to both ends.

It is understood that the first protective ring 315 can provide protection, reduce wear on the first mounting base 311 from other components, and extend the service life of the first mounting base 311.

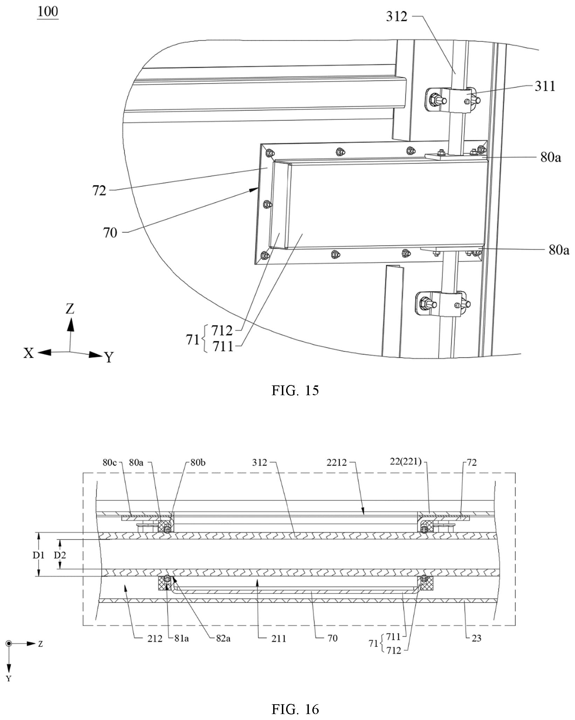

Please refer to FIG. 11, FIG. 15, and FIG. 16. FIG. 15 is a structural schematic diagram of a partial structure of the door panel assembly 100 shown in FIG. 2 from a second angle, and FIG. 16 is an enlarged view of region N in FIG. 12.

In this embodiment, the first locking rod 312 can extend along the height direction of the first door panel 20 and passes through the first waterproof member 70, the first mounting base 311, and the first surrounding plate 24. Specifically, the first locking rod 312 can pass through the second through hole 713 of the first waterproof member 70, the first mounting hole 3111a of the first mounting base 311, and the first through hole 2411 of the first surrounding plate 24. The first locking rod 312 can rotate circumferentially within the second through hole 713, the first mounting hole 3111a, and the first through hole 2411. The circumferential direction of the first locking rod 312 is the direction that forms a full circle around the central axis of the first locking rod 312.

The first locking rod 312 can be a hollow structure. This saves material and reduces production costs while maintaining the strength of the first locking rod 312. The dimension of the hollow area within the first locking rod 312 is the inner diameter D2 of the first locking rod 312 along the radial direction of the first locking rod 312.

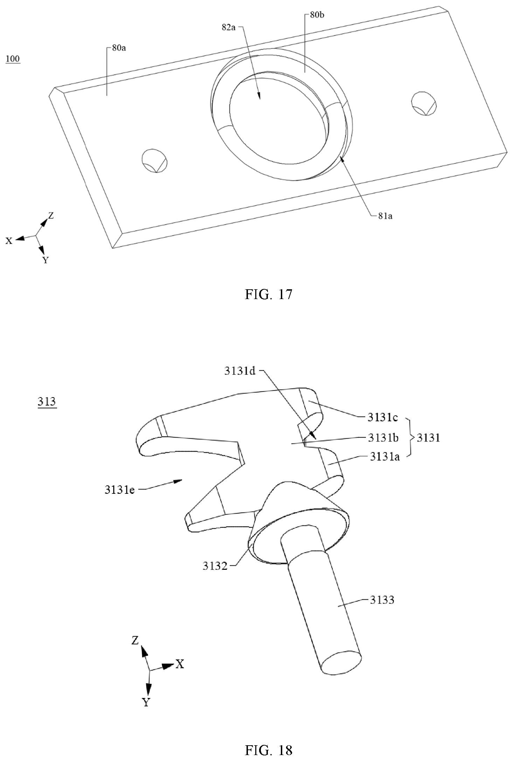

In one possible implementation, please refer to FIGs. 15, 16, and 17. FIG. 17 is a structural schematic diagram of a partial structure of the door panel assembly 100 shown in FIG. 2 from a third angle.

The door panel assembly 100 may further include a first press plate 80a and a first sealing ring 80b. The first press plate 80a is located within the second cavity 212 of the first door panel 20. The first press plate 80a is sleeved on the first locking rod 312 and fixedly connected to the first waterproof member 70. For example, the first press plate 80a can be fixedly connected to the first waterproof member 70 by screws. Specifically, the first press plate 80a abuts against the surface of the second border 712 of the first waterproof member 70 facing toward the first frame body 11 of the door frame 10. For example, the first press plate 80a can be an aluminum plate.

The first press plate 80a may have a first groove 81a and a first hole 82a. The opening of the first groove 81a is located on the surface of the first press plate 80a facing toward the second border 712 of the first waterproof member 70. The first groove 81a is formed by recessing from the surface of the first press plate 80a toward the second border 712 into the interior of the first press plate 80a. The first groove 81a may communicate with the second through hole 713 of the first waterproof member 70. The first hole 82a may extend along the thickness direction (Z direction in the diagram) of the first press plate 80a, passing through the surface of the first press plate 80a away from the first waterproof member 70 and the bottom wall of the first groove 81a. The first hole 82a is coaxially arranged with and communicates with the first groove 81a.

There can be two first press plates 80a. In the width direction (Z direction in the diagram) of the first waterproof member 70, the two first press plates 80a respectively abut against both ends of the first waterproof member 70.

The first sealing ring 80b is located within the second cavity 212 of the first door panel 20 and is sleeved on the first locking rod 312. The first sealing ring 80b is also located within the first groove 81a of the first press plate 80a and elastically abuts against the bottom wall of the first groove 81a and the second border 712 of the first waterproof member 70.

The number of first sealing rings 80b can be equal to the number of first press plates 80a. That is, there can be two first sealing rings 80b. In the width direction of the first waterproof member 70, the two first sealing rings 80b are respectively located in the first groove 81a of one first press plate 80a, and elastically abut against the bottom wall of one first groove 81a and the second border 712 of one first waterproof member 70.

It is understandable that by setting the first press plate 80a, a force can be applied from the first frame body 11 towards the first waterproof member 70 to the first sealing ring 80b connected to the first waterproof member 70, thereby compressing the first sealing ring 80b and making it more tightly abut against the first waterproof member 70, thus enhancing the waterproof sealing performance of the first waterproof member 70.

In this embodiment, the inner diameter of the first sealing ring 80b can be smaller than the maximum cross-sectional dimension of the first locking rod 312 along its height direction. That is, the inner diameter of the first sealing ring 80b can be smaller than the outer diameter D1 of the first locking rod 312. In other words, the first sealing ring 80b can be interference-fitted with the first locking rod 312. This causes compression between the first locking rod 312 and the first sealing ring 80b to achieve a sealed connection between the first locking rod 312 and the first sealing ring 80b, thereby realizing the waterproof sealing function of the first waterproof member 70. This design prevents rainwater, dust, etc. outside the energy storage container from entering the second cavity 212 of the first door panel 20 through the first opening 2212, the second through hole 713 of the first waterproof member 70, the first sealing ring 80b, the first groove 81a and the first hole 82a of the first compression plate 80a, and thus damaging the first locking assembly 30.

In summary, this embodiment achieves the waterproof function of the energy storage container 200 through the cooperation of the first waterproof member 70, the first press plate 80a, and the first sealing ring 80b.

Please refer to FIGs. 11 and 18. FIG. 18 is a structural schematic diagram of the first lock head 313 of the first locking assembly 30 shown in FIG. 10a from one angle.

In this embodiment, the first lock head 313 can be connected to the end of the first locking rod 312. Part of the first lock head 313 is surrounded by the first surrounding plate 24 and exposed through the second opening 232 of the first door panel 20. Specifically, the first lock head 313 may include a first lock head body 3131, a first intermediate part 3132, and a first connecting rod 3133. In the height direction (Z direction in the figure) of the first lock head 313, the first connecting rod 3133 and the first lock head body 3131 are respectively connected to both ends of the first intermediate part 3132. The first lock head body 3131 can engage or disengage with the second locking mechanism 32 to control the opening and closing of the first door panel 20. The first lock head body 3131 and the first intermediate part 3132 can be exposed through the second opening 232 of the first inner panel 23. The first lock head body 3131, the first intermediate part 3132, and the first connecting rod 3133 can be connected to form an integral structure. That is, the first lock head 313 can be an integral structure.

The first lock head body 3131 may include a first connecting part 3131a, a second connecting part 3131b, and a third connecting part 3131c. The first connecting part 3131a and the third connecting part 3131c are respectively connected to both ends of the second connecting part 3131b. The first connecting part 313 1a, the second connecting part 3131b, and the third connecting part 3131c are connected sequentially. The end of the first connecting part 3131a away from the second connecting part 3131b is fixedly connected to the first intermediate part 3132. The maximum dimension of the second connecting part 3131b in the width direction (X direction in the figure) of the first lock head 313 is less than the minimum dimension of the first connecting part 3131a in the width direction of the first lock head 313, and also less than the minimum dimension of the third connecting part 3131c in the width direction of the first lock head 313. This allows the second connecting part 3131b, the first connecting part 3131a, and the third connecting part 3131c to form a first notch 3131d and a second notch 3131e. The first connecting part 3131a, the second connecting part 3131b, and the third connecting part 3131c can be connected to form an integral structure. That is, the first lock head body 3131 can be a integral structure.

Referring to FIGs. 10b and 12, the first connecting rod 3133 can be connected to the first locking rod 312 to achieve a fixed connection between the first lock head 313 and the first locking rod 312. Specifically, the first connecting rod 3133 extends along the height direction of the first lock head 313. One end of the first connecting rod 3133 is fixedly connected to the first intermediate part 3132, and the other end of the first connecting rod 3133 extends into the first locking rod 312 and is fixedly connected to the first locking rod 312. The maximum dimension of the cross-section of the first connecting rod 3133 along the height direction of the first lock head 313 is less than the dimension of the hollow region within the first locking rod 312 along the radial direction of the first locking rod 312 (i.e., the inner diameter D2 of the first locking rod 312). This allows the first connecting rod 3133 to be embedded within the hollow first locking rod 312, thereby achieving a fixed connection between the first lock head 313 and the first locking rod 312.

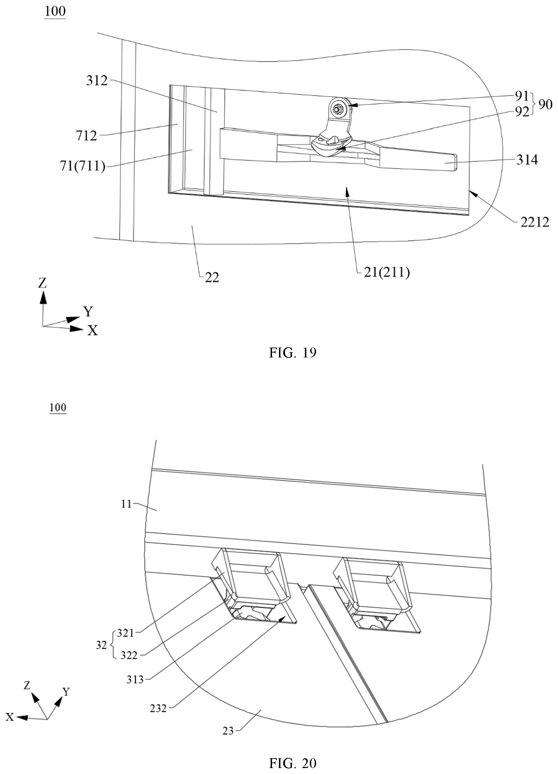

Please refer to FIGs. 13 and 19. FIG. 19 is a structural schematic diagram of a partial structure of the door panel assembly 100 shown in FIG. 2 from a fourth angle. A first handle 314 is located within the first cavity 211 of the first accommodating cavity 21 and exposed through a first opening 2212 on the first outer panel 22. The first handle 314 is fixedly connected to a first locking rod 312 located within the first cavity 211 of the first door panel 20. The remaining sides of the first handle 314 may not be connected to any other components. This ensures that when the first handle 314 is used to rotate the first locking rod 312, the first handle 314 is not subject to the constraining force of other components.

Continuing to refer to FIGs. 13 and 19, the door panel assembly 100 may also include a first latch 90. The first latch 90 may be located within the first cavity 211 of the first accommodating cavity 21 and rotatably connected to the first waterproof member 70 or the first inner panel 23. The first latch 90 may also engage or disengage from the first handle 314 to achieve locking or unlocking of the first latch 90 with the first locking mechanism 31.

Specifically, the first latch 90 may include a first end 91 and a second end 92. The first end 91 and the second end 92 are spaced apart along the thickness direction of the first door panel 20. The first end 91 is rotatably connected to the second base plate 711 or the first inner panel 23 of the first waterproof member 70 (illustrated as rotatably connected to the second base plate 711). The second end 92 is a free end, which can be engaged or disengaged from the first handle 314 by rotation relative to the first door panel 20. When the second end 92 rotates to engage with the first handle 314, the first handle 314 is locked with the first latch 90, and the first handle 314 is fixed, thereby preventing the first locking rod 312 from rotating and keeping the first door panel 20 closed. When the second end 92 rotates to disengage from the first handle 314, the first handle 314 is unlocked from the first latch 90, allowing the first handle 314 to rotate freely, thereby rotating the first locking rod 312 to achieve opening and closing the first door panel 20.

It is understandable that by exposing the first handle 314 and the first latch 90 through the first opening 2212 on the first door panel 20, operators can easily operate the first door panel 20 from exterior of the energy storage container 200. Furthermore, by placing both the first handle 314 and the first latch 90 within the first accommodating cavity 21 of the first door panel 20, the accidental opening of the first door panel 20 by accidentally touching the first handle 314 and the first latch 90 can be prevented.

Refer to FIGs. 11 and 20. FIG. 20 is a structural schematic diagram of a partial structure of the door panel assembly 100 shown in FIG. 2 from a fifth angle.

The second locking mechanism 32 is fixedly connected to the door frame 10. At least a part of the second locking mechanism 32 is located within the first accommodating cavity 21 of the first door panel 20. Specifically, the second locking mechanism 32 includes a first fixing member 321 and a first lock base 322 connected together. The first fixing member 321 is fixedly connected to the first frame body 11 of the door frame 10 and is located on the side of the first inner panel 23 away from the first outer panel 22. The installation position of the first fixing member 321 does not exceed the protrusion range of the first frame body 11 relative to the first inner panel 23, so that the first fixing member 321 does not occupy additional space inside the energy storage container 200. The first lock base 322 is fixedly connected to the first fixing member 321. The first lock base 322 is located in the second cavity 212 of the first door panel 20 and is exposed by the second opening 232 of the first door panel 20. The first lock base 322 can engage with the first lock head 313 to close the first door panel 20 to the first frame body 11 of the door frame 10. Alternatively, the first lock base 322 can be separated from the first lock head 313 to allow the first door panel 20 to rotate relative to the first frame body 11 of the door frame 10. The first lock base 322 and the first fixing member 321 can be connected to form an integral structure. Alternatively, the first lock base 322 and the first fixing member 321 can be separate structures, but are fixed together by assembly.

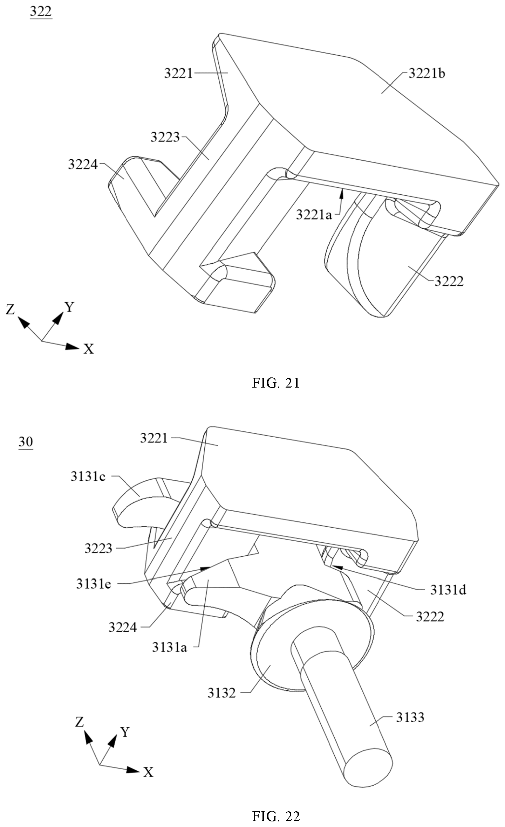

Refer to FIGs. 20, 21, and 22. FIG. 21 is a structural schematic diagram of the first lock base 322 of the first lock assembly 30 shown in FIG. 10a from one angle. FIG. 22 is a schematic diagram of the first lock base 322 and the first lock header 313 of the first lock assembly 30 shown in FIG. 10a in a state after assembly.

The first lock base 322 may include a first mating part 3221, a second mating part 3222, a third mating part 3223, and a fourth mating part 3224. The first mating part 3221 may include a third surface 3221a and a fourth surface 3221b. The third surface 3221a and the fourth surface 3221b are arranged opposite each other in the thickness direction (Y direction shown in the figure) of the first mating part 3221. The third surface 3221a faces toward the first outer panel 22. The fourth surface 3221b is connected to the first fixing member 321. In the width direction (X direction in the figure) of the first lock base 322, the second mating part 3222 and the third mating part 3223 are respectively connected to both sides of the third surface 3221a. The fourth mating part 3224 is connected to the end of the third mating part 3223 away from the first mating part 3221. The minimum dimension of the fourth mating part 3224 in the length direction (Z direction in the figure) of the first lock base 322 is greater than the maximum dimension of the third mating part 3223 in the length direction of the first lock base 322. The first mating part 3221, the second mating part 3222, the third mating part 3223, and the fourth mating part 3224 can be connected to form an integral structure. That is, the first lock base 322 can be an integral structure.

As shown in FIG. 22, when the first lock base 322 is engaged with the first lock head 313, the second mating part 3222 is located in the first notch 3131d of the first lock head 313. The third mating part 3223 is located in the second notch 3131e of the first lock head 313. The surface of the fourth mating part 3224 facing toward the third mating part 3223 is connected to the first connecting part 3131a and the third connecting part 3131c of the first lock head 313.

In one possible application scenario, referring again to FIG. 12, the first lock assembly 30 may include a first locking mechanism 31 and two second locking mechanisms 32. The first locking mechanism 31 may include a first locking rod 312 and two first lock heads 313. Each second locking mechanism 32 includes a first lock base 322 and a first fixing member 321. The first locking rod 312 extends along the height direction of the door panel assembly 100. The two first lock heads 313 are respectively fixedly connected to both ends of the first locking rod 312 in the length direction (Z direction shown in the figure). One of the second locking mechanisms 32 is fixedly connected to a first frame body 11 and is configured to engage or disengage with one of the first lock heads 313. The other second locking mechanism 32 is fixedly connected to another first frame body 11 and is configured to engage or disengage with the other first lock head 313. Therefore, the first locking rod 312, together with the two first lock heads 313 and the two second locking mechanisms 32 at its ends, forms a support structure along the height direction of the door panel assembly 100, enhancing the strength of the first door panel 20.

It can be understood that, in the prior art, the locking assemblies of energy storage containers are usually installed on the exterior of the door, which occupies more space on the exterior of the energy storage container door, resulting in the energy storage container occupying too much space as a whole. This may reduce the transportation efficiency of the energy storage container, thereby increasing its transportation costs. Furthermore, externally mounted locking assemblies are susceptible to environmental factors such as rain, dust, smog, etc., which can accelerate corrosion and aging. In severe cases, this can lead to poor fit between the locking assemblies, making opening and closing the door difficult, thus affecting the efficiency and safety of the energy storage container.

Therefore, in this embodiment, all first lock assemblies 30 except for the first fixing member 321 are disposed within the first accommodating cavity 21 of the first door panel 20, so that these first lock assemblies 30 do not occupy the external space of the energy storage container 200. The first fixing member 321 is disposed inside the energy storage container 200, and the installation position of the first fixing member 321 does not exceed the protrusion range of the first frame body 11 relative to the first door panel 20, so that the first fixing member 321 also does not occupy the external space of the energy storage container 200, and does not lose the internal space of the energy storage container 200. That is, the first lock assemblies 30 as a whole do not occupy the external space of the energy storage container 200, nor do they occupy the internal space of the energy storage container 200, thus improving the space utilization rate of the energy storage container 200. Furthermore, the first locking assembly 30, located inside the first door panel 20 and the energy storage container 200, can avoid the influence of external environmental factors. More specifically, there is no need to provide a protrusion on the first door panel 20 to protect the first locking assembly 30. The first locking assembly 30 can be protected from external environmental factors by being located within the first accommodating cavity 21 of the first door panel 20 itself. This greatly reduces the risk of weathering and corrosion of the first locking assembly 30, extending its service life and improving its safety. In addition, the first locking assembly 30 can also serve as a supporting structure, enhancing the strength of the first door panel 20.

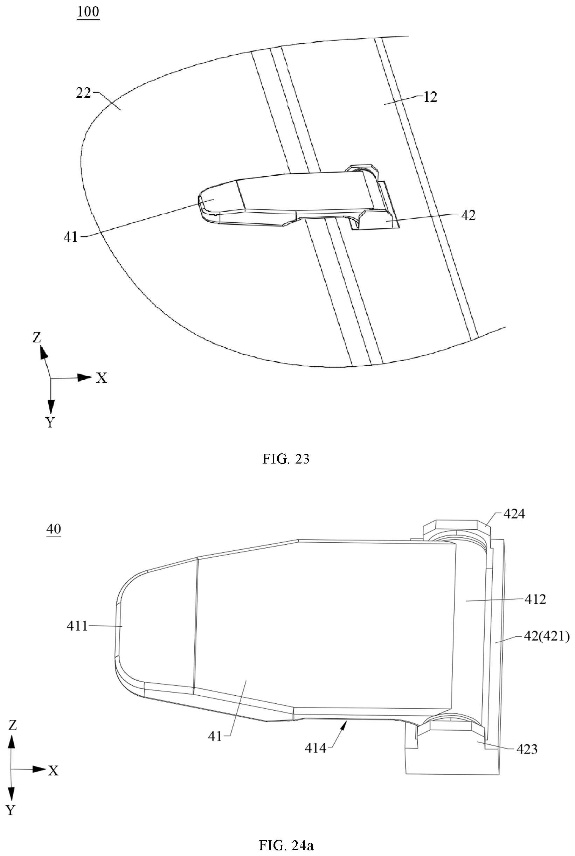

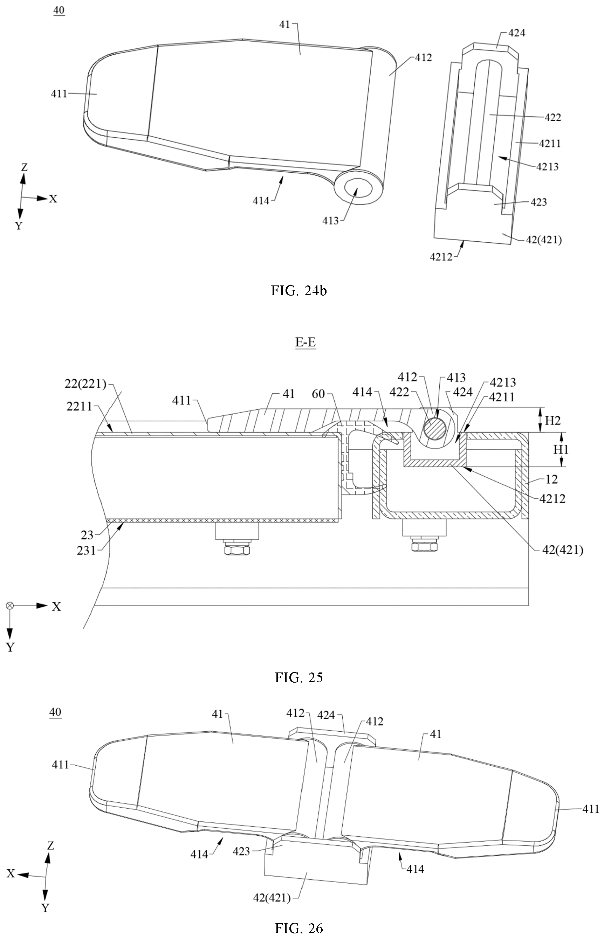

Please refer to FIGs. 23, 24a, 24b, and 25. FIG. 23 is a structural schematic diagram of a partial structure of the door panel assembly 100 shown in FIG. 2 from a sixth-angle. FIG. 24a is a structural schematic diagram of the first hinge component 40 of the door panel assembly 100 shown in FIG. 2. FIG. 24b is an exploded view of the first hinge component 40 shown in FIG. 24a. FIG. 25 is a fourth cross-sectional schematic diagram of a partial structure of the door panel assembly 100 obtained by cutting along the section line E-E shown in FIG. 2.

The first hinge component 40 is connected between the first door panel 20 and the second frame body 12 of the door frame 10 to achieve a rotatable connection between the first door panel 20 and the second frame body 12 of the door frame 10. Part of the first hinge component 40 is located within the second frame body 12 of the door frame 10, while the remaining part protrudes relative to the second frame body 12 of the door frame 10. Specifically, the first hinge component 40 may include a first hinge 41 and a first base 42. The first base 42 is fixedly connected to the second frame body 12, and at least a part of the first base 42 is located within the second frame body 12. One end of the first hinge 41 is rotatably connected to the first base 42. The other end of the first hinge 41 is fixedly connected to the first door panel 20.

The first base 42 may include a first box body 421, a first shaft 422, a first baffle 423, and a second baffle 424. Along the length direction of the first base 42 (Z direction in the diagram), the first baffle 423 and the second baffle 424 are respectively connected to both sides of the surface of the first box body 421 facing toward the exterior of the energy storage container 200. The first shaft 422 is fixedly connected between the first baffle 423 and the second baffle 424. The first box body 421, the first shaft 422, the first baffle 423, and the second baffle 424 can be connected to form an integral structure. That is, the first base 42 can be an integral structure.

It can be understood that by designing the first box body 421, the first shaft 422, the first baffle 423, and the second baffle 424 as a integrated structure, there are no seams or welding points between them, reducing potential failure points and giving the first base 42 overall higher structural strength. Furthermore, the integrated design reduces assembly time between the first box body 421, the first shaft 422, the first baffle 423, and the second baffle 424, shortening the production cycle and improving production efficiency.

The first box body 421 may include a fifth surface 4211 and a sixth surface 4212. The fifth surface 4211 and the sixth surface 4212 are arranged opposite to and facing away from each other in the height direction (Y direction in the diagram) of the first base 42. The fifth surface 4211 faces outwards from the energy storage container 200.

The first box body 421 may be provided with a first receiving groove 4213. The opening of the first receiving groove 4213 is located on the fifth surface 4211. The first receiving groove 4213 can be formed by recessing into the first box body 421 from the fifth surface 4211.

A first baffle 423 and a second baffle 424 are respectively connected to both sides of the fifth surface 4211 along the length direction of the first base 42. Both the first baffle 423 and the second baffle 424 extend relative to the fifth surface 4211 towards the exterior of the energy storage container 200. The dimension of the end of the first baffle 423 away from the fifth surface 4211 along the width direction (X direction in the figure) of the second frame body 12 is less than the dimension of the end of the first baffle 423 connected to the fifth surface 4211 along the width direction of the second frame body 12. The corner of the end of the first baffle 423 away from the first box body 421 is chamfered. And/or, the dimension of the end of the first baffle 423 away from the fifth surface 4211 along the width direction of the second frame body 12 is less than the dimension of the end of the first baffle 423 connected to the fifth surface 4211 along the width direction of the second frame body 12. The corner of the end of the second baffle 424 away from the first box body 421 is chamfered.

It can be understood that because the ends of the first baffle 423 and the second baffle 424 away from the first box body 421 protrude from the second frame body 12, during the opening and closing of the energy storage container 200, the first baffle 423 and the second baffle 424 may scrape, scratch, or damage other structures in the door panel assembly 100 (such as the sealing strip 60 described below). Therefore, designing the corners of the ends of the first baffle 423 and/or the second baffle 424 protruding from the second frame body 12 as chamfered avoids these other structures in the door panel assembly 100, ensuring that the energy storage container 200 will not pinch or damage these other structures in the door panel assembly 100 during opening and closing.

In this embodiment, the first box body 421 is entirely located within the second frame body 12. The first baffle 423 is partially located within the second frame body 12, with the remainder located outside the second frame body 12. The second baffle 424 is partially located inside the second frame body 12, with the remainder located outside the second frame body 12. Alternatively, as shown in FIG. 25, the first box body 421 is entirely located inside the second frame body 12. The fifth surface 4211 of the first box 421 is flush with the surface of the second frame body 12 facing the exterior of the energy storage container 200. Both the first baffle 423 and the second baffle 424 are entirely located outside the second frame body 12. Alternatively, the first box body 421 is partially located inside the second frame body 12, with the remainder located outside the second frame body 12. Both the first baffle 423 and the second baffle 424 are entirely located outside the second frame body 12.

It should be noted that this embodiment does not strictly limit the degree of embedding of the first base 42 within the second frame body 12, only requiring that the dimension H1 of the portion of the first base 42 embedded in the second frame body 12 along the thickness direction (Y direction in the figure) of the second frame body 12 is greater than the dimension H2 of the portion of the first base 42 protruding outward the second frame body 12 along the thickness direction of the second frame body 12.

It can be understood that, by designing a larger thickness for the portion of the first base 42 embedded within the second frame body 12, the first base 42 can reuse a portion of the internal space of the second frame body 12, thereby reducing the space occupied by the first base 42 outside the second frame body 12. This is beneficial for the thinning and miniaturization of the door panel assembly 100. Additionally, it provides a receiving space for the sealing strip 60 described below, ensuring that the sealing strip 60 is not squeezed or damaged when the first door panel 20 is opened.

Referring to FIGs. 24a, 24b, and 25, the first hinge 41 may include a third end 411 and a fourth end 412. The third end 411 and the fourth end 412 are arranged opposite each other along the length direction (X direction in the figures) of the first hinge 41. The third end 411 is fixedly connected to the first outer panel 22. The fourth end 412 is sleeved on the first shaft 422 of the first base 42 and is rotatable relative to the first shaft 422. Specifically, the first hinge 41 may have a first ear hole 413. The first ear hole 413 extends through the fourth end 412 along the width direction (Z direction in the diagram) of the first hinge 41. The first ear hole 413 is configured to sleeve on the first shaft 422 of the first base 42. A part of the fourth end 412 is also located within the first receiving groove 4213 of the first base 42. That is, a part of the first hinge 41 can be embedded within the second frame body 12 of the door frame 10.

The first hinge 41 may also be provided with a first mating groove 414. The first mating groove 414 is recessed from the surface of the first hinge 41 facing toward the first outer panel 22 into the interior of the first hinge 41. The first mating groove 414 is located between the third end 411 and the fourth end 412.

It can be understood that by embedding the first base 42 and the first hinge 41 within the second frame body 12 of the door frame 10, the space occupied by the first hinge component 40 in the thickness direction of the energy storage container 200 can be reduced while ensuring the strength of the first hinge component 40. Simultaneously, the protrusion thickness of the first hinge component 40 relative to the second frame body 12 does not exceed the thickness of the container corner member, thus preventing the first hinge component 40 from being subjected to external impacts and damage during transportation and handling. Furthermore, it ensures that when energy storage containers 200 are stacked, the first hinge component 40 will not interfere with the placement of other energy storage containers 200, ensuring stacking stability and safety.

In this embodiment, only one first hinge 41 can be accommodated within the same first base 42. Alternatively, two first hinges 41 can also be accommodated within the same first base 42. The following will describe this in detail through two specific embodiments.

In one possible embodiment, referring to FIG. 24a, the first hinge component 40 may include a first base 42 and a first hinge 41. The first base 42 may include a first box body 421, a first baffle 423, a second baffle 424, and a first shaft 422. The first shaft 422 is fixedly connected between the first baffle 423 and the second baffle 424. The first hinge 41 is sleeved on the first shaft 422 and is rotatable relative to the first shaft 422.

In another possible embodiment, please refer to FIG. 26, which is another structural schematic diagram of the first hinge component 40 of the door panel assembly 100 shown in FIG. 2.

In this embodiment, the contents that are the same as in the previous embodiment will not be repeated. The difference from the previous embodiment is that the first hinge component 40 may include a first base 42 and two first hinges 41. The first base 42 may include a first box body 421, a first baffle 423, a second baffle 424, and two first shafts 422. Both first shafts 422 are fixedly connected between the first baffle 423 and the second baffle 424. One first hinge 41 is sleeved on one first shaft 422 and is rotatable relative to this first shaft 422. The other first hinge 41 is sleeved on the other first shaft 422 and is rotatable relative to this first shaft 422.

Referring again to FIGs. 2 and 3, the door panel assembly 100 may also include a sealing strip 60. The sealing strip 60 is wrapped around and connected between the door frame 10 and the first door panel 20, and between the door frame 10 and the second door panel 50a, to ensure the sealing performance of the door panel assembly 100. The following description will use the sealing strip 60 connected between the door frame 10 and the first door panel 20 as an example to illustrate the structure of the sealing strip 60. Unless otherwise specified, the following description of the sealing strip 60 can be applied to the case where the sealing strip 60 is connected between the door frame 10 and the second door panel 50a.

Specifically, the sealing strip 60 may include a first sealing part 61, a second sealing part 62, and a third sealing part 63. In the thickness direction (Y direction in the figure) of the sealing strip 60, the first sealing part 61 and the third sealing part 63 are connected to both ends of the second sealing part 62. The first sealing part 61, the second sealing part 62, and the third sealing part 63 can be connected to form an integral structure. That is, the sealing strip 60 can be an integral structure.

The first sealing part 61 is located outside the door panel assembly 100 and abuts against both the first surface 2211 of the first door panel 20 and the surface of the door frame 10 facing the exterior of the energy storage container 200, so as to completely isolate the gap between the door frame 10 and the first border 222 of the first door panel 20 from the exterior of the energy storage container 200, thereby achieving the sealing effect of the sealing strip 60. Part of the first sealing part 61 may also be located within the first mating groove 414 of the first hinge 41. The second sealing part 62 and the third sealing part 63 are both located in the gap between the door frame 10 and the first border 222 of the first door panel 20. The second sealing part 62 abuts against the first border 222 of the first door panel 20. The third sealing part 63 abuts against the surface of the door frame 10 facing toward the first door panel 20. By having the second sealing part 62 and the third sealing part 63 abut against the door panel assembly 100, the connection stability between the sealing strip 60 and the door panel assembly 100 can be improved, ensuring the stability of the sealing performance of the sealing strip 60.

In this embodiment, referring to FIG. 3, the dimension of the second sealing part 62 along the length direction of the first door panel 20 can be less than the dimension of the first sealing part 61 along the length direction of the first door panel 20, and also less than the dimension of the third sealing part 63 along the length direction of the first door panel 20. That is, the second sealing part 62 does not need to fill the entire gap between the door frame 10 and the first border 222 of the first door panel 20. This reduces material usage and thus lowers production costs while ensuring the sealing effect of the sealing strip 60.

Referring to FIG. 2, the door panel assembly 100 may also include a hasp 50d. One end of the hasp 50d is rotatably connected to the first surface 2211 of the first door panel 20. The other end of the hasp 50d abuts against or separates from the second door panel 50a. It is understood that the hasp 50d can securely connect the first door panel 20 and the second door panel 50a in the double-door structure, thereby enhancing the safety of the energy storage container 200 when closed.

In this embodiment, the door panel assembly 100 may include a first state and a second state. The first state is the closed state of the door panel assembly 100, in which the first door panel 20 is relatively fixed to the first frame body 11. The second state is the open state of the door panel assembly 100, in which the first door panel 20 can rotate relative to the second frame body 12, thereby separating from the first frame body 11.

When the door panel assembly 100 is in the first state, the second end 92 of the first latch 90 engages with the first handle 314, and the first handle 314 is fixed. The first lock head 313 is locked to the first lock base 322. The end of the hasp 50d away from the first door panel 20 abuts against the surface of the second door panel 50a facing the exterior of the energy storage container 200. At this time, the hasp 50d also abuts against the first sealing part 61 of the sealing strip 60.

When the door panel assembly 100 is in the second state, the second end 92 of the first latch 90 separates from the first handle 314. The first lock head 313 separates from the first lock base 322. The end of the hasp 50d away from the first door panel 20 separates from the surface of the second door panel 50a facing the exterior of the energy storage container 200. At this time, the hasp 50d separates from the sealing strip 60.

In some other embodiments, the hasp 50d may not be provided on the door panel assembly 100. This is not a limitation.

In this embodiment, opening and closing the first door panel 20 of the energy storage container 200 may include at least the following steps:
Step 1: Open the hasp 50d, allowing the first door panel 20 to move relative to other door panels.

Step 2: Rotate the second end 92 of the first latch 90 clockwise or counterclockwise to separate the second end 92 of the first latch 90 from the first handle 314.

Step 3: Turn the first handle 314 to rotate it away from the first door panel 20. The first handle 314 drives the first locking rod 312 to rotate circumferentially. The first locking rod 312 drives the first lock head 313 to rotate, causing the second mating part 3222 of the first lock base 322 to disengage from the first notch 3131d of the first lock head 313, and causing the third mating part 3223 of the first lock base 322 to disengage from the second notch 3131e of the first lock head 313. This allows the first lock head 313 to separate from the first lock base 322. This releases the fixed connection between the first door panel 20 and the first frame body 11, allowing the first door frame 10 to rotate relative to the first frame body 11.

Step 4: Pull the first handle 314 toward the exterior of the energy storage container 200, causing the first locking rod 312 to exert a force on the first door panel 20 toward the exterior of the energy storage container 200. This separates the first door panel 20 from the first frame body 11 of the door frame 10, opening the energy storage container 200 for loading or unloading operations, etc.

Step 5: Push the first door panel 20 to rotate it relative to the second frame body 12 of the door frame 10 until it closes to the first frame body 11 of the door frame 10.

Step 6: Turn the first handle 314 to rotate it toward a direction close to the first door panel 20 until it is positioned within the first cavity 211 of the first door panel 20. During this rotation, the first handle 314 will cause the first locking rod 312 to rotate circumferentially. The first locking rod 312 drives the first lock head 313 to rotate, causing the second mating part 3222 of the first lock base 322 to engage within the first notch 3131d of the first lock head 313, and the third mating part 3223 of the first lock base 322 to engage within the second notch 3131e of the first lock head 313. This locks the first lock head 313 and the first lock base 322, thereby fixing the first door panel 20 and the door frame 10 relatively.

Step 7: Rotate the second end 92 of the first latch 90 counterclockwise or clockwise, causing the second end 92 of the first latch 90 to abut against the first handle 314, thus locking the first latch 90 and the first handle 314.

Step 8: Close the hasp 50d, causing the hasp 50d to engage between the first door panel 20 and the second door panel 50a.

It should be noted that if the door panel assembly 100 does not have a hasp 50d, steps 1 and 8 can be omitted.

### Second Embodiment:

In this embodiment, the contents identical to those in the first embodiment will not be repeated, and the contents different from those in the first embodiment will be described in detail below. Furthermore, the descriptions of structural improvements to the door panel assembly 100 in this embodiment can be applied to the first embodiment above, unless otherwise specified.

The following will describe in detail, with reference to the accompanying drawings, the differences between the structures of the components in the door panel assembly 100 in this embodiment and those in the first embodiment, as well as the differences between the connection relationships between the components in the door panel assembly 100 in this embodiment and those in the first embodiment.

In this embodiment, the structure of the door frame 10 can refer to the relevant description of the door frame 10 in the first embodiment, and will not be repeated.

In this embodiment, the first door panel 20 may include a first outer panel 22, a first inner panel 23, and a first waterproof member 70. The structures of the first outer panel 22, the first inner panel 23, and the first waterproof member 70 can generally refer to the relevant description of the first door panel 20 in the first embodiment; the differences will be explained below.

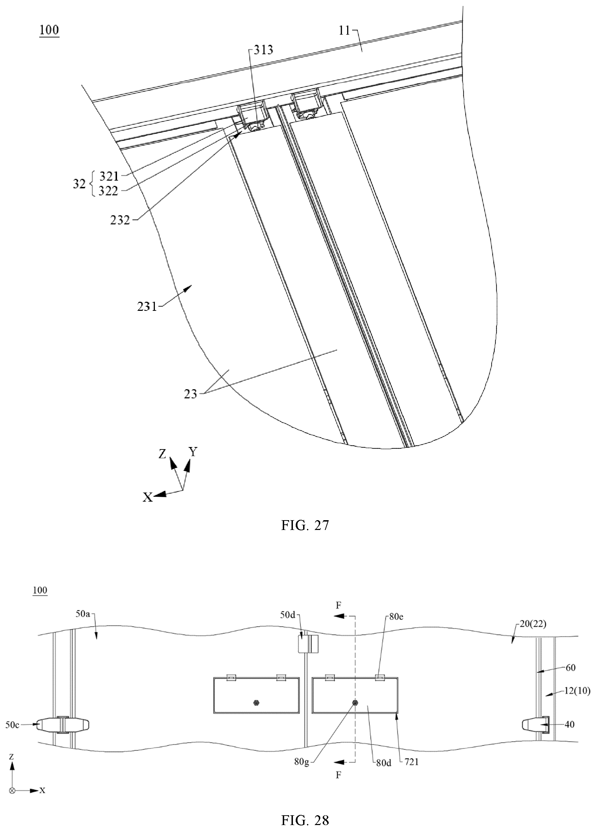

Please refer to FIG. 27, which is another structural schematic diagram of a partial structure of the door panel assembly 100 provided in the second embodiment of the present disclosure.

In this embodiment, the second opening 232 of the first inner panel 23 can penetrate not only the edge of the second surface 231 close to the first frame body 11, but also the edge of the second surface 231 away from the second frame body 12. The second opening 232 of the first inner panel 23 can be configured to expose the first lock base 322 and part of the first lock head 313. The first door panel 20 may not have a first surrounding plate 24. The first inner panel 23 can be a split structure; for example, the first inner panel 23 can be formed by multiple sub-panels. In some other embodiments, the first inner panel 23 can also be an integral structure.

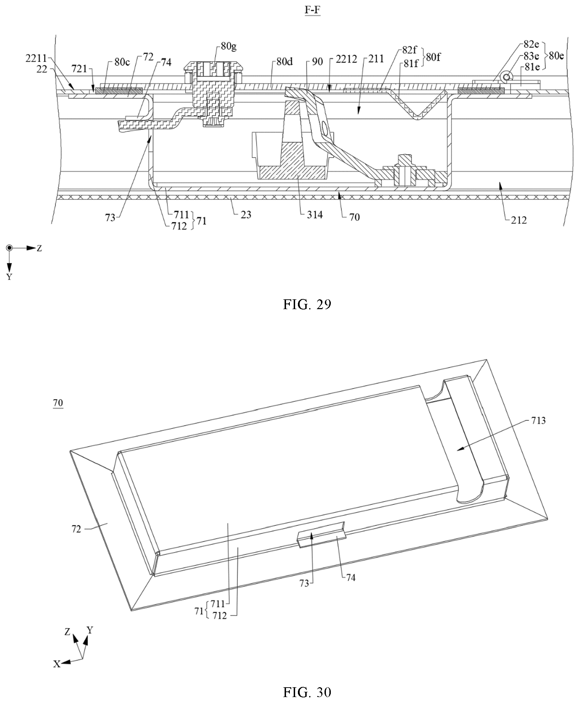

Please refer to FIGs. 28, 29, and 30. FIG. 28 is a structural schematic diagram of a partial structure of the door panel assembly 100 shown in FIG. 27 from a first angle. FIG. 29 is a fifth cross-sectional schematic diagram of a partial structure of the door panel assembly 100 obtained by cutting along the section line F-F shown in FIG. 28. FIG. 30 is another structural schematic diagram of the first waterproof member 70 of the first door panel 20 shown in FIG. 29 from an angle.

In this embodiment, the first waterproof member 70 may include a first waterproof member body 71 and a first sealing plate 72. The structures of the first waterproof member body 71 and the first sealing plate 72 can generally refer to the relevant description of the first waterproof member 70 in the first embodiment; the differences will be explained below.

The first sealing plate 72 can be fixedly connected to the first outer panel 22, and the projection of the first sealing plate 72 on the first inner panel 23 along the thickness direction of the first door panel 20 partially overlaps with the projection of the first outer panel 22 on the first inner panel 23 along the thickness direction of the first door panel 20. The first sealing plate 72 and the first outer panel 22 also form a first receiving groove 721. The first receiving groove 721 communicates with a first opening 2212 on the first outer panel 22. A part of the first sealing plate 72 is fixedly connected to the first outer panel 22. The remaining part of the first sealing plate 72 and the first outer panel 22 form the first receiving groove 721. The partial surface of the first sealing plate 72 facing the exterior of the energy storage container 200 forms the bottom wall of the first receiving groove 721.

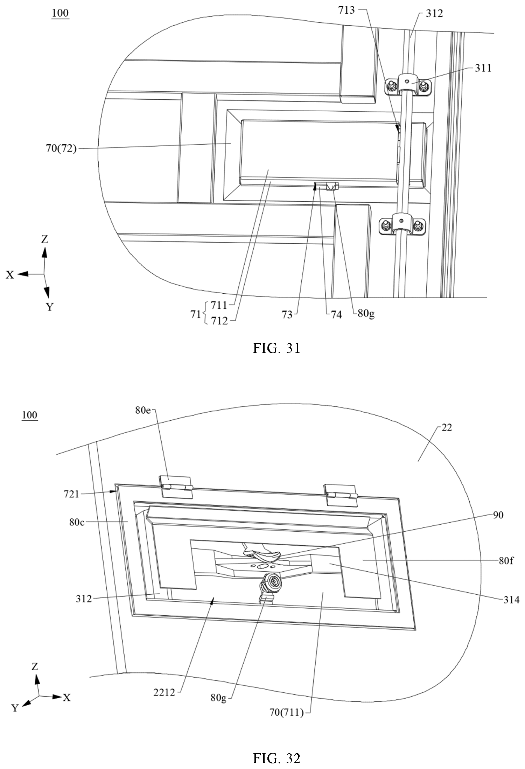

Please refer to FIGs. 30 and 31. FIG. 31 is a structural schematic diagram of a partial structure of the door panel assembly 100 shown in FIG. 27 from a second angle.

The first waterproof member body 71 may be provided with a second through hole 713. The second through hole 713 penetrates the first waterproof member body 71 along its height direction (Z direction in the figure). Specifically, the second through hole 713 penetrates the second base plate 711 and the second border 712 of the first waterproof member body 71 along its height direction. The second through hole 713 communicates with both the first cavity 211 and the second cavity 212 of the first door panel 20. That is, in this embodiment, the first cavity 211 and the second cavity 212 of the first door panel 20 are connected. The second through hole 713 can be used for the first locking rod 312 to pass through.

It is understood that by having the second through hole 713 penetrate the second base plate 711 and the second border 712 of the first waterproof member body 71, the first locking rod 312 can enter the first waterproof member 70 from the penetrated second base plate 711, and then connect with the first handle 314 located inside the first waterproof member body 71. This greatly reduces the installation difficulty of the first locking rod 312 and also facilitates subsequent replacement of the damaged first locking rod 312.

In this embodiment, the first waterproof member 70 may also be provided with a third through hole 73. The third through hole 73 penetrates the second border 712 along the height direction of the first waterproof member body 71. Along the length direction of the first waterproof member body 71 (X direction in the figure), the third through hole 73 is spaced apart from the second through hole 713. The third through hole 73 can also connect the first cavity 211 and the second cavity 212 of the first door panel 20. The number of third through holes 73 can be one.

The first waterproof member 70 may also include a first fixing plate 74. The first fixing plate 74 is fixedly connected to the inner surface of the third through hole 73 and protrudes from the surface of the second border 712 facing toward the first frame body 11 of the door frame 10. The first fixing plate 74 and the first waterproof member body 71 can be connected to form an integral structure. For example, the first fixing plate 74 can be formed by extrusion of a part of the second border 712 of the first waterproof member body 71.

Please refer to FIGs. 28, 29, and 32. FIG. 32 is a structural schematic diagram of a partial structure of the door panel assembly 100 shown in FIG. 27 from a third angle.

In this embodiment, the first door panel 20 may further include a first waterproof cover 80d. A part of the first waterproof cover 80d is located within a first receiving groove 721. The first waterproof cover 80d is rotatably connected to the first outer panel 22. The first waterproof cover 80d can be opened or closed relative to the first waterproof member 70, thereby achieving a sealed connection or separation with the first sealing plate 72.

Specifically, when the door panel assembly 100 is in the first state, the first waterproof cover 80d is closed relative to the first waterproof member 70, sealing the first opening 2212 on the first outer panel 22. At this time, the first waterproof cover 80d is sealed to the first sealing plate 72 of the first waterproof member 70. The first waterproof cover 80d isolates the first waterproof member 70 from the exterior of the energy storage container 200, preventing rainwater and seawater from entering the container through the first opening 2212 on the first outer panel 22, thus achieving a sealed and waterproof performance. When the door panel assembly 100 is in the second state, the first waterproof cover 80d is open relative to the first waterproof member 70. That is, the first waterproof cover 80d separates from the first sealing plate 72 of the first waterproof member 70. At this time, the first opening 2212 on the first outer panel 22 is exposed, allowing the first waterproof member 70 to communicate with the exterior of the energy storage container 200 through the first opening 2212 on the first outer panel 22.

In summary, the first waterproof member 70 achieves isolation or communication with the exterior of the energy storage container 200 through the first waterproof cover 80d. In other words, this embodiment achieves the waterproof performance of the energy storage container 200 through the cooperation of the first waterproof member 70 and the first waterproof cover 80d.

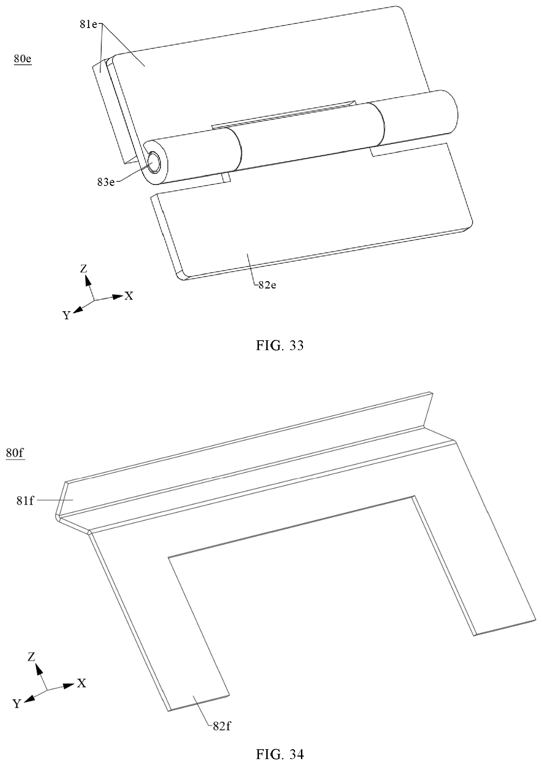

Please refer to FIGs. 28, 29, and 33. FIG. 33 is a structural schematic diagram of the first connecting member 80e of the first door panel 20 shown in FIG. 28 from one angle.

The first door panel 20 may further include the first connecting member 80e. The first connecting member 80e may include a first fixing part 81e, a second fixing part 82e, and a first rotating shaft 83e. The first fixing part 81e is fixedly connected to the first surface 2211 of the first outer panel 22. The second fixing part 82e is fixedly connected to the surface of the first waterproof cover 80d away from the first cavity 211, and is rotatably connected to the first fixing part 81e via the first rotating shaft 83e. That is, the second fixing part 82e can rotate relative to the first outer panel 22, thereby allowing the first waterproof cover 80d to rotate relative to the first outer panel 22, thus achieving a sealed connection or separation between the first waterproof cover 80d and the first sealing plate 72. The first fixing part 81e, the second fixing part 82e, and the first rotating shaft 83e can be connected to form an integral structure.

Please refer to FIGs. 29, 32 and 34. FIG. 34 is a structural schematic diagram of the first reinforcing member 80f of the first door panel 20 shown in FIG. 32 from an angle.

The first door panel 20 may further include a first reinforcing member 80f. The first reinforcing member 80f is fixedly connected to the first waterproof cover 80d and can rotate relative to the first outer panel 22 along with the first waterproof cover 80d. Specifically, the first reinforcing member 80f may include a first bent part 81f and a first straight part 82f. The first straight part 82f is fixedly connected to the surface of the first waterproof cover 80d facing toward the first inner panel 23. The first bent part 81f is fixedly connected to one end of the first straight part 82f. When the door panel assembly 100 is in the second state, the first reinforcing member 80f is located within the first cavity 211 of the first door panel 20. The first straight part 82f is spaced apart from the first locking rod 312. The first bent part 81f abuts between the first waterproof cover 80d and the first locking rod 312. The first straight part 82f and the first bent part 81f can be connected to form an integral structure.

It is understood that by providing a first reinforcing member 80f within the first cavity 211 and connecting the first reinforcing member 80f to the surface of the first waterproof cover 80d facing toward the first inner panel 23, the strength of the first waterproof cover 80d can be enhanced, effectively preventing deformation of the first waterproof cover 80d. Furthermore, the first bent part 81f, abutting between the first waterproof cover 80d and the first locking rod 312, can also provide support, further preventing deformation of the first waterproof cover 80d.

In some other embodiments, the first reinforcing member 80f may not be provided.

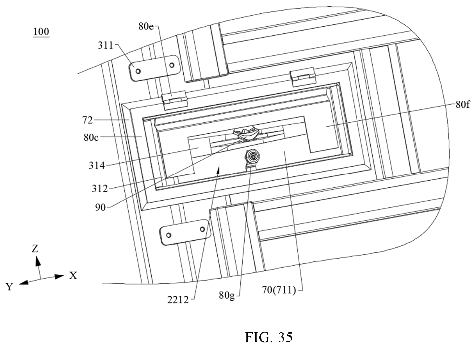

Please refer to FIGs. 9, 29 and 35. FIG. 35 is a structural schematic diagram of a partial structure of the door panel assembly 100 shown in FIG. 27 from a fourth angle.

In this embodiment, at least a part of the first pad 80c is located within the first receiving groove 721. The first pad 80c connects the first waterproof cover 80d and the first sealing plate 72 of the first waterproof member 70 to further enhance the sealing performance between the first waterproof cover 80d and the first waterproof member 70. The first pad 80c can match the shape of the first sealing plate 72 for better fit. That is, the first pad 80c can be annular. The size of the first pad 80c can be smaller than the size of the first sealing plate 72; specifically, the projection of the first pad 80c on the first sealing plate 72 along the thickness direction of the first door panel 20 lies within the first sealing plate 72. In the XZ plane, the first pad 80c is also spaced apart from the first outer panel 22.

Referring to FIGs. 28 and 29, the door panel assembly 100 may further include a second latch 80g. The second latch 80g is mounted on the first waterproof member 70 and the first waterproof cover 80d. The second latch 80g controls the opening or closing of the first waterproof cover 80d to achieve a sealed connection or separation between the first waterproof cover 80d and the first sealing plate 72 of the first waterproof member 70.

For example, one end of the second latch 80g passes through the third through hole 73 of the first waterproof member 70 and is fixedly connected to the first fixing plate 74 of the first waterproof member 70. The other end of the second latch 80g passes through the first waterproof cover 80d and protrudes from the surface of the first waterproof cover 80d toward the exterior of the energy storage container 200.

In this embodiment, the structure of the first lock assembly 30 can be referred to the relevant description of the first lock assembly 30 in the first embodiment, and will not be repeated here.

In this embodiment, the structure of the first hinge component 40 can be referred to the relevant description of the first hinge component 40 in the first embodiment, and will not be repeated here.

In this embodiment, opening and closing the first door panel 20 of the energy storage container 200 may include at least the following steps:
Step 1: Open the hasp 50d, allowing the first door panel 20 to move relative to other door panels.

Step 2: Open the second latch 80g, and pull the first waterproof cover 80d outwards from the energy storage container 200, separating the first waterproof cover 80d from the first sealing plate 72 of the first waterproof member 70, exposing the first latch 90 and the first handle 314.

Step 3: Rotate the second end 92 of the first latch 90 clockwise or counterclockwise, separating the second end 92 of the first latch 90 from the first handle 314.

Step 4: Turn the first handle 314, causing it to rotate away from the first door panel 20. The first handle 314 drives the first locking rod 312 to rotate in its circumferential direction. The first locking rod 312 drives the first lock head 313 to rotate, causing the second mating part 3222 of the first lock base 322 to disengage from the first notch 3131d of the first lock head 313, and causing the third mating part 3223 of the first lock base 322 to disengage from the second notch 3131e of the first lock head 313. This allows the first lock head 313 to separate from the first lock base 322. This releases the fixed connection between the first door panel 20 and the first frame body 11, allowing the first door frame 10 to rotate relative to the first frame body 11.

Fifth step: Pull the first handle 314 outwards from the energy storage container 200, causing the first locking rod 312 to exert a force on the first door panel 20 outwards from the energy storage container 200, thereby separating the first door panel 20 from the first frame body 11 of the door frame 10, opening the energy storage container 200 for loading or unloading operations, etc.

Step 6: Push the first door panel 20, causing it to rotate relative to the second frame body 12 of the door frame 10 until it closes to the first frame body 11 of the door frame 10.

Step 7: Turn the first handle 314, causing it to rotate close to the first door panel 20 until it is positioned within the first cavity 211 of the first door panel 20. During this rotation, the first handle 314 will cause the first locking rod 312 to rotate circumferentially. The first locking rod 312 will then cause the first lock head 313 to rotate, causing the second mating part 3222 of the first lock base 322 to engage with the first notch 3131d of the first lock head 313, and the third mating part 3223 of the first lock base 322 to engage with the second notch 3131e of the first lock head 313. This locks the first lock head 313 with the first lock base 322, thereby fixing the first door panel 20 and the door frame 10 relatively.

Step 8: Rotate the second end 92 of the first latch 90 counterclockwise or clockwise until it abuts against the first handle 314, thus locking the first latch 90 and the first handle 314.

Step 9: Push the first waterproof cover 80d towards the first door panel 20 so that the first waterproof cover 80d contacts the first sealing plate 72 of the first waterproof member 70. Then close the second latch 80g, so that the first waterproof cover 80d forms a sealed connection with the first sealing plate 72 of the first waterproof member 70.

Step 10: Close the hasp 50d, causing the hasp 50d to engage between the first door panel 20 and the second door panel 50a.

Note that if the door panel assembly 100 does not have the hasp 50d, steps 1 and 10 can be omitted.

The embodiments of the present disclosure have been described in detail above. Specific examples have been used to illustrate the principles and implementation methods of the present disclosure. The description of the above embodiments is only for the purpose of helping to understand the method and core ideas of the present disclosure. At the same time, for those skilled in the art, there will be changes in the specific implementation methods and application scope based on the ideas of the present disclosure. Therefore, the content of this specification should not be construed as a limitation of the present disclosure.

## Claims

1. A door panel assembly (100), comprising a door frame (10), a first door panel (20), and a first lock assembly (30);
wherein the first door panel (20) is rotatably connected to the door frame (10), the first door panel (20) comprises a first surface (2211), a first opening (2212), and a first accommodating cavity (21), the first surface (2211) is configured to face exterior of an energy storage container (200) to which the door panel assembly (100) is applied, the first opening (2212) is located on the first surface (2211) and is capable of being closed to isolate from the exterior of the energy storage container (200) or capable of being open to communicate with the exterior of the energy storage container (200), the first accommodating cavity (21) communicates with the first opening (2212);
the first lock assembly (30) comprises a first locking mechanism (31) and a second locking mechanism (32), the first locking mechanism (31) is located within the first accommodating cavity (21) and rotatably connected to the first door panel (20), a part of the first locking mechanism (31) is disposed opposite to the first opening (2212) in a thickness direction of the first door panel (20), at least a part of the second locking mechanism (32) is located within the first accommodating cavity (21), and the second locking mechanism (32) is fixedly connected to the door frame (10); and
the door panel assembly (100) comprises a first state and a second state, when the door panel assembly (100) is in the first state, the first locking mechanism (31) and the second locking mechanism are locked, and the first door panel (20) is relatively fixed to the door frame (10); when the door panel assembly (100) is in the second state, the first locking mechanism (31) and the second locking mechanism (32) are unlocked, and the first door panel (20) is rotatable relative to the door frame (10).

2. The door panel assembly according to claim 1, wherein the first accommodating cavity (21) comprises a first cavity (211) and a second cavity (212), the first cavity (211) is isolated from or communicates with the second cavity (212), and the first cavity (211) further communicates with the first opening (2212);
the first locking mechanism (31) comprises a first mounting base (311), a first locking rod (312), a first lock head (313), and a first handle (314), the first mounting base (311) is located in the second cavity (212) and fixedly connected to the first door panel (20), the first locking rod (312) is located in both the first cavity (211) and the second cavity (212), the first locking rod (312) passes through the first mounting base (311) and is rotatably connected to the first mounting base (311), the first lock head (313) is located in the second cavity (212) and fixedly connected to the first locking rod (312), the first lock head (313) is capable of engaging with or disengaging from the second locking mechanism (32), and the first handle (314) is located in the first cavity (211) and fixedly connected to the first locking rod (312), and the first handle (314) is capable of driving the first locking rod (312) to rotate relative to the first mounting base (311).

3. The door panel assembly according to claim 2, wherein the first door panel (20) comprises a first inner panel (23), a first outer panel (23), and a first waterproof member (70), the first inner panel (23) and the first outer panel (23) surround to form the first accommodating cavity (21), the first waterproof member (70) is connected between the first inner panel (23) and the first outer panel (23) and divides the first accommodating cavity (21) into a first cavity (211) and a second cavity (212), the first locking rod (312) passes through the first waterproof member (70) and extends along a height direction of the first door panel (20).

4. The door panel assembly according to claim 3, wherein the first waterproof member (70) communicates with the exterior of the energy storage container (200) through the first opening (2212);
the door panel assembly (100) further comprises a first press plate (80a) and a first sealing ring (80b), both the first press plate (80a) and the first sealing ring (80b) are located within the second cavity (212), the first press plate (80a) is sleeved on the first locking rod (312) and abuts against the first waterproof member (70), the first sealing ring (80b) is sleeved on the first locking rod (312) and elastically abuts between the first press plate (80a) and the first waterproof member (70).

5. The door panel assembly according to claim 4, wherein the first waterproof member (70) comprises a first waterproof member body (71) and a first sealing plate (72), the first waterproof member body (71) forms the first cavity (211) by enclosing, the first sealing plate (72) is circumferentially connected to an outer edge of the first waterproof member body (71), the first sealing plate (72) is further fixedly connected to the first outer panel (22), a projection of the first sealing plate (72) on the first outer panel (22) along the thickness direction of the first door panel (20) is entirely located within the first outer panel (22); and
the first door panel (20) further comprises a first pad (80c), the first pad (80c) is connected between the first sealing plate (72) and the first outer panel (22).

6. The door panel assembly according to claim 3, wherein the first door panel (20) further comprises a first waterproof cover (80d), the first waterproof cover (80d) is rotatably connected to the first outer panel (22);
when the door panel assembly (100) is in the first state, the first waterproof cover (80d) is closed, sealing the first opening (2212), and the first waterproof member (70) is isolated from the exterior of the energy storage container (200); and
when the door panel assembly (100) is in the second state, the first waterproof cover (80d) is open, exposing the first opening (2212), and the first waterproof member (70) communicates with the exterior of the energy storage container (200) through the first opening (2212),
preferably, the first waterproof member (70) comprises a first waterproof member body (71) and a first sealing plate (72), the first waterproof member body (71) forms the first cavity (211) by enclosing, the first sealing plate (72) is circumferentially connected to an outer edge of the first waterproof member body (71), the first sealing plate (72) is further fixedly connected to the first outer panel (22), a projection of the first sealing plate (72) on the first inner panel (23) along the thickness direction of the first door panel (20) partially overlaps a projection of the first outer panel (22) on the first inner panel (23) along the thickness direction of the first door panel (20); and
the first door panel (20) further comprises a first pad (80c), and the first pad (80c) is connected to the first sealing plate (72) and located between the first sealing plate (72) and the first waterproof cover (80d).

7. The door panel assembly according to any one of claims 3 to 6, wherein the first lock assembly (30) further comprises a first latch (90), the first latch (90) is located within the first cavity (211) and rotatably connected to the first waterproof member (70) or the first inner panel (23), and the first latch (90) is capable of engaging with or disengaging from the first handle (314).

8. The door panel assembly according to any one of claims 2 to 6, wherein the first door panel (20) further comprises a second surface (231) and a second opening (232), the second surface (231) is configured to face interior of the energy storage container (200) and is disposed opposite to and facing away from the first surface (2211) in the thickness direction of the first door panel (20), and the second opening is located on the second surface (231); and
the second locking mechanism (32) comprises a first fixing member (321) and a first lock base (322) connected with each other, the first fixing member (321) is located outside the first door panel (20), the first lock base (322) is located within the second cavity (212) and exposed by the second opening (232), and the first lock base (322) is capable of engaging with or disengaging from the first lock head (313).

9. The door panel assembly according to any one of claims 1 to 6, wherein the door frame (10) comprises a first frame body (11) and a second frame body (12) connected with each other, the first frame body (11) extends along a width direction of the first door panel (20), the second frame body (12) extends along a height direction of the first door panel (20), and the second locking mechanism (32) is fixedly connected to the first frame body (11);
the door panel assembly (100) further comprises a first hinge component (40), a part of the first hinge component (40) is located within the second frame body (12), the first door panel (20) is rotatably connected to the second frame body (12) via the first hinge component (40).

10. The door panel assembly according to claim 9, wherein the first hinge component (40) comprises a first hinge (41) and a first base (42), the first base (42) is fixedly connected to the second frame body (12), at least a part of the first base (42) is located within the second frame body (12), an end of the first hinge (41) is rotatably connected to the first base (42), and an other end of the first hinge (41) is fixedly connected to the first door panel (20).

11. The door panel assembly according to claim 10, wherein a dimension occupied by a part of the first base (42) embedded within the second frame body (12) in a thickness direction of the second frame body (12) is greater than a dimension occupied by a part of the first base (42) protruding outward from the second frame body (12) in the thickness direction of the second frame body (12).

12. The door panel assembly according to claim 10 or 11, wherein the first base (42) comprises a first box body (421), a first shaft (422), a first baffle (423), and a second baffle (424); the first box body (421) is embedded in the second frame body (12); the first baffle (423) and the second baffle (424) are respectively connected to two opposite sides of the first box body (421); at least a part of the first baffle (423) and at least a part of the second baffle (424) are located outside the second frame body (12); the first shaft (422) is connected between the first baffle (423) and the second baffle (424); the first hinge (41) is sleeved on the first shaft (422) and is rotatable relative to the first shaft (422);
a dimension of an end of the first baffle (423) away from the first box body (421) along a width direction of the second frame body (12) is less than a dimension of an end of the first baffle (423) connected to the first box body (421) along the width direction of the second frame body (12); and/or, a dimension of an end of the second baffle (424) away from the first box body (421) along the width direction of the second frame body (12) is less than a dimension of an end of the second baffle (424) connected to the first box body (421) along the width direction of the second frame body (12).

13. The door panel assembly according to claim 12, wherein the first box body (421) is provided with a first receiving groove (4213), and a part of the first hinge (41) is located within the first receiving groove (4213).

14. The door panel assembly according to claim 12, wherein the first box body (421), the first shaft (422), the first baffle (423), and the second baffle (424) are connected to form an integral structure.

15. An energy storage container (200), wherein the energy storage container (200) comprises a container body (210) and a door panel assembly (100) according to any one of claims 1 to 14, and the door panel assembly (100) is connected to the container body (210).
